# EUROPEAN PATENT APPLICATION

(11) **EP 3 385 061 A1**
(43) Date of publication of application: **10.10.2018**
(21) Application number: 16870728.9
(22) Date of filing: 30.11.2016
(51) Int. Cl.: B29C 67/00, B33Y 30/00, B33Y 50/00, B33Y 50/02, G06F 17/50

(54) **INFORMATION-PROCESSING DEVICE, THREE-DIMENSIONAL MANUFACTURING SYSTEM, INFORMATION-PROCESSING METHOD, INFORMATION-PROCESSING PROGRAM, AND COMPUTER-READABLE RECORDING MEDIUM**

(30) Priority: 03.12.2015 JP 2015236870
(71) Applicant: Ricoh Company, Ltd., Tokyo 143-8555 (JP)
(72) Inventor: YANG, Fei, Tokyo 143-8555 (JP); YUKUMOTO, Reiji, Tokyo 143-8555 (JP); MAEDA, Hiroshi, Tokyo 1438555 (JP); KOBAYASHI, Koji, Tokyo 143-8555 (JP); YUJI, Yasuaki, Tokyo 143-8555 (JP)
(74) Representative: White, Duncan Rohan
(86) International application number: PCT/JP2016/085603
(87) International publication number: WO 2017/094791

(57) **Abstract**

There is provision of an information processing device for processing three-dimensional information representing a three-dimensional shape of a solid object to be modeled by a solid object modeling device configured to model the solid object by depositing a plurality of layers each of which is formed by discharging the filamentary molding material on the flat surface. The information processing device is configured to acquire the three-dimensional information, generate a plurality of pieces of layer information corresponding to the respective layers of the filamentary molding materials, by slicing the three-dimensional information, generate deposition information used for depositing the filamentary molding material from the layer information, generate gap region information representing a gap region to be formed between the filamentary molding materials based on the deposition information, and generate discharging information for controlling discharge of the filamentary molding material, in accordance with the deposition information and the gap region information.

## Description

### BACKGROUND OF THE INVENTION

### 1. Field of the Invention

The present disclosure relates to an information processing device, a solid object modeling system, an information processing method, an information processing program, and a computer-readable recording medium, especially relates to a processing technique of solid object information (three-dimensional information) representing a three-dimensional shape of a solid object to be modeled by a solid object modeling device.

### 2. Description of the Related Art

In recent years, a technology called additive manufacturing is receiving attention. In the additive manufacturing, a solid object (which is a three-dimensional object, and hereinafter may be referred to as a "3D model") is modeled by depositing layers of molding materials using a solid object modeling device (what is called a 3D printer). The additive manufacturing is implemented by a 3D printer for discharging filamentary molding material (hereinafter may be referred to as "filament") to a designated location, and by a software for creating a 3D model from 3D model data designated by a user and for indicating to the 3D printer a location where the filament is to be discharged. The software analyzes the 3D model data, and converts the 3D model data into a control code for controlling the 3D printer, using a module called "slicer" included in the software.

The slicer cuts the 3D model into slices having a same thickness along a Z-axis direction, and generates slice data from the cross-sectional shape of the 3D model at each Z coordinate. In the above mentioned additive manufacturing, based on the slice data, toolpath data, which represents a path and width of a toolpath indicating a location where the filament is to be discharged, is generated, and the toolpath data is processed from a piece of the toolpath data corresponding to the lowermost layer of the 3D model. The 3D model is created by depositing filament layers from the lowermost layer to the uppermost layer. Each filament layer is formed by discharging a filament from the 3D printer, with discharge location of the filament moved in accordance with the toolpath data of each layer. The toolpath data is trajectory information representing a path and width of the toolpath, and the toolpath indicates a location where the filament is to be discharged when an outline or an interior of the slice data is generated with a single stroke.

In the additive manufacturing technique, a method for generating toolpath is proposed, in which a hatch path is determined based on intersections of the hatch and an outline, in generating a fill parameter (see Patent Document 1, for example).

### [Citation List]

### [Patent Document]

[Patent Document 1] Japanese Unexamined Patent Application Publication No. 2001-353786

### SUMMARY OF THE INVENTION

### [TECHNICAL PROBLEM]

In the method disclosed in Patent Document 1, toolpath data representing a path and width of the toolpath that indicates a location where the filament is to be discharged with a single stroke is generated, and a 3D model is created by depositing a filament based on the generated toolpath data. In creating the 3D model, if an amount of discharge of a filament per unit of time is constant, a gap, in which a filament is not filled, may occur on a surface of the 3D model or inside the 3D model.

The present disclosure is made to solve the above problem, and aims at, when creating a 3D model by depositing layers of molding materials by discharging filamentary molding materials on a flat surface, making a gap which may occur between the filamentary molding materials discharged on the flat surface small, or preferably eliminating the gap.

### [SOLUTION TO PROBLEM]

To solve the above problem, according to one aspect of the present disclosure, there is provision of an information processing device for processing three-dimensional information representing a three-dimensional shape of a solid object to be modeled by a solid object modeling device configured to model the solid object by depositing a plurality of layers each of which is formed by discharging the filamentary molding material on the flat surface. The information processing device includes: a three-dimensional information acquisition unit configured to acquire the three-dimensional information; a layer information generating unit configured to generate a plurality of pieces of layer information corresponding to the respective layers of the filamentary molding materials, by slicing the three-dimensional information; a deposition information generating unit configured to generate, from the layer information, deposition information used for depositing the filamentary molding material by discharging the filamentary molding material on the flat surface; a gap region information generating unit configured to generate gap region information representing a gap region to be formed between the filamentary molding materials by depositing the filamentary molding material based on the deposition information; and a discharging information generating unit configured to generate discharging information for controlling discharge of the filamentary molding material, in accordance with the deposition information and the gap region information.

### [ADVANTAGEOUS EFFECTS OF INVENTION]

According to the present disclosure, when creating a 3D model by depositing layers of molding materials by discharging filamentary molding materials on a flat surface, a gap which may occur between the filamentary molding materials discharged on the flat surface can be made small, or the gap can be preferably eliminated.

### BRIEF DESCRIPTION OF THE DRAWINGS

FIG. 1 is a diagram illustrating an operating configuration of a solid object modeling system according to a first embodiment;
FIG. 2 is a diagram illustrating an example of a hardware configuration of an information processing device according to the first embodiment;
FIG. 3 is a perspective view illustrating an example of a configuration of a 3D printer according to the first embodiment;
FIG. 4 is a block diagram illustrating an example of a functional configuration of the 3D printer according to the first embodiment;
FIG. 5 is a block diagram illustrating an example of a functional configuration of a PC (Personal Computer) according to the first embodiment;
FIG. 6 is a block diagram illustrating an example of a functional configuration of a 3D data conversion processing unit according to the first embodiment;
FIG. 7A is a diagram (1) illustrating an example of a 3D data conversion process according to the first embodiment;
FIG. 7B is a diagram (2) illustrating the example of the 3D data conversion process according to the first embodiment;
FIG. 7C is a diagram (3) illustrating the example of the 3D data conversion process according to the first embodiment;
FIG. 7D is a diagram (4) illustrating the example of the 3D data conversion process according to the first embodiment;
FIG. 8 is a diagram illustrating an example of toolpath data according to the first embodiment;
FIG. 9 is a diagram illustrating an exemplary configuration of the toolpath data according to the first embodiment;
FIG. 10 is a diagram illustrating an example of contour information in the toolpath data according to the first embodiment;
FIG. 11 is a diagram illustrating an example of a gap region formed between filaments that may be formed when creating a 3D model with the 3D printer;
FIG. 12 is a flowchart illustrating an operation of a gap region data acquisition unit and the data processing unit according to the first embodiment;
FIG. 13A is a diagram (1) illustrating an example of a process for converting toolpath data into image data according to the first embodiment;
FIG. 13B is a diagram (2) illustrating the example of the process for converting the toolpath data into the image data according to the first embodiment;
FIG. 13C is a diagram (3) illustrating the example of the process for converting the toolpath data into the image data according to the first embodiment;
FIG. 14A is a diagram (1) illustrating an example of a process for separating a region where a toolpath is drawn and a region where a toolpath is not drawn according to the first embodiment;
FIG. 14B is a diagram (2) illustrating the example of the process for separating the region where the toolpath is drawn and the region where the toolpath is not drawn according to the first embodiment;
FIG. 14C is a diagram (3) illustrating the example of the process for separating the region where the toolpath is drawn and the region where the toolpath is not drawn according to the first embodiment;
FIG. 15A is a diagram (1) illustrating an example of a process for expanding a width of a toolpath according to the first embodiment;
FIG. 15B is a diagram (2) illustrating the example of the process for expanding the width of the toolpath according to the first embodiment;
FIG. 15C is a diagram (3) illustrating the example of the process for expanding the width of the toolpath according to the first embodiment;
FIG. 15D is a diagram (4) illustrating the example of the process for expanding the width of the toolpath according to the first embodiment;
FIG. 16 is a flowchart illustrating an operation of a gap region data acquisition unit and a data processing unit according to a second embodiment;
FIG. 17 is a flowchart illustrating an operation of a gap region data acquisition unit and a data processing unit according to a third embodiment;
FIG. 18A is a diagram (1) illustrating an example of a process for extracting a part of a toolpath adjacent to a gap region according to the third embodiment;
FIG. 18B is a diagram (2) illustrating the example of the process for extracting the part of the toolpath adjacent to the gap region according to the third embodiment;
FIG. 19 is a flowchart illustrating an operation of a gap region data acquisition unit and a data processing unit according to a fourth embodiment;
FIG. 20A is a diagram (1) illustrating an example of a process for adding a new toolpath in accordance with a size of a gap region according to the fourth embodiment;
FIG. 20B is a diagram (2) illustrating the example of the process for adding the new toolpath in accordance with the size of the gap region according to the fourth embodiment;
FIG. 21 is a flowchart illustrating an operation of a gap region data acquisition unit and a data processing unit according to a fifth embodiment;
FIG. 22A is a diagram (1) illustrating an example of a process for adjusting a route of a toolpath according to the fifth embodiment;
FIG. 22B is a diagram (2) illustrating the example of the process for adjusting the route of the toolpath according to the fifth embodiment;
FIG. 23 is a flowchart illustrating an operation of a gap region data acquisition unit and a data processing unit according to a sixth embodiment;
FIG. 24A is a diagram (1) illustrating an example of a process for searching for a gap region in each search region according to the sixth embodiment;
FIG. 24B is a diagram (2) illustrating the example of the process for searching for the gap region in each search region according to the sixth embodiment;
FIG. 24C is a diagram (3) illustrating the example of the process for searching for the gap region in each search region according to the sixth embodiment;
FIG. 24D is a diagram (4) illustrating the example of the process for searching for the gap region in each search region according to the sixth embodiment;
FIG. 25 is a flowchart illustrating an operation of a gap region data acquisition unit and a data processing unit according to a seventh embodiment;
FIG. 26A is a diagram (1) illustrating an example of a process for processing a gap region between outlines according to the seventh embodiment;
FIG. 26B is a diagram (2) illustrating the example of the process for processing the gap region between the outlines according to the seventh embodiment;
FIG. 26C is a diagram (3) illustrating the example of the process for processing the gap region between the outlines according to the seventh embodiment;
FIG. 27 is a flowchart illustrating an operation of a gap region data acquisition unit and a data processing unit according to an eighth embodiment;
FIG. 28 is a flowchart illustrating an operation of a gap region data acquisition unit and a data processing unit according to a ninth embodiment;
FIG. 29 is a flowchart illustrating an operation of a gap region data acquisition unit and a data processing unit according to a tenth embodiment; and
FIG. 30 is a flowchart illustrating an operation of a gap region data acquisition unit and a data processing unit according to an eleventh embodiment.

### DETAILED DESCRIPTION OF THE PREFERRED EMBODIMENTS

### [First Embodiment]

In the following, a first embodiment of the present disclosure will be described with reference to the drawings. In the description of the present embodiment, an example of a solid object modeling system including a 3D printer and a PC will be explained. The 3D printer in the solid object modeling system is configured to receive modeling data such as toolpath data, obtained by converting 3D data such as CAD (Computer Aided Design) data representing a shape of a 3D model, and to create the 3D model by depositing layers of filaments based on the modeling data. The PC is configured to send the modeling data to the 3D printer. In the following, the solid object modeling system according to the present embodiment, especially a data processing function of the PC performed when the modeling data is sent to the 3D printer, will be described.

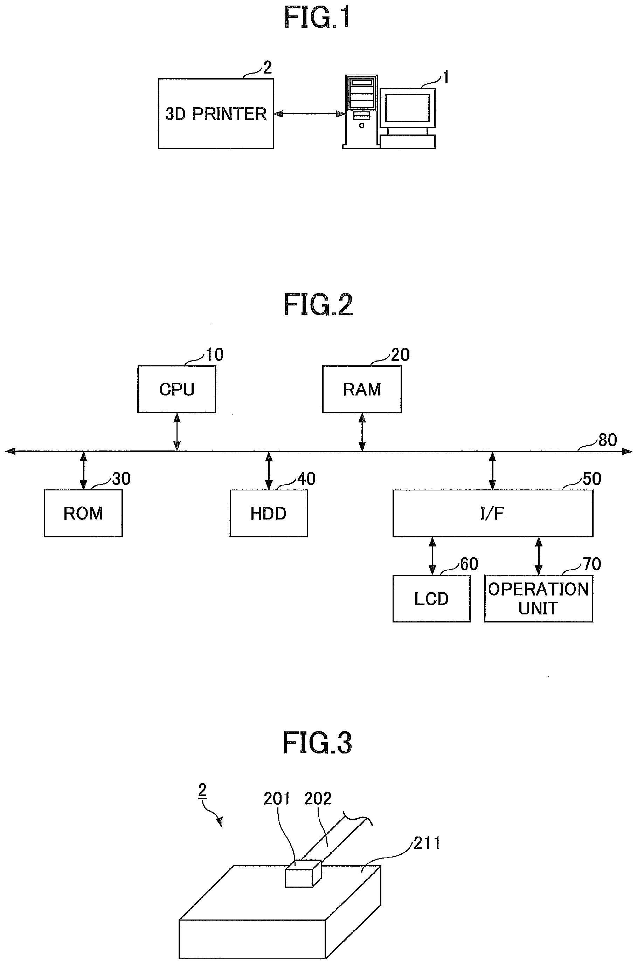

FIG. 1 is a diagram illustrating an operating configuration of the solid object modeling system according to the present embodiment. The solid object modeling system according to the present embodiment includes a PC 1 and a 3D printer 2. The PC 1 generates modeling data by analyzing and converting entered 3D data, and outputs the modeling data to the 3D printer 2. The 3D printer 2 is an example of a solid object modeling device, and performs solid object modeling in accordance with control of the PC 1. Accordingly, the 3D printer 2 is an example of a manufacturing device of a 3D model. A hardware configuration of the PC 1 will be described with reference to FIG. 2.

As illustrated in FIG. 2, the PC 1 according to the present embodiment includes a hardware configuration similar to a general purpose information processing device. That is, the PC 1 according to the present embodiment includes a CPU (Central Processing Unit) 10, a RAM (Random Access Memory) 20, a ROM (Read-Only Memory) 30, an HDD (Hard Disk Drive) 40, and an I/F (Interface) 50, each of which is interconnected via a bus 80. Also, an LCD (Liquid Crystal Display) 60 and an operation unit 70 are connected to the I/F 50.

The CPU 10 controls an entirety of the PC 1. The RAM 20 is a volatile storage medium capable of high-speed information acquisition or information storage, and is used as a work area when the CPU 10 performs information processing. The ROM 30 is a read-only nonvolatile storage medium, and is used for storing a program such as firmware. The HDD 40 is a nonvolatile storage medium capable of reading or writing information, and is used for storing an OS (Operating System), various control programs, an application program, and the like.

The I/F 50 is for connecting various hardware or network to the bus 80. The LCD 60 is a visual user interface used for checking status of the PC 1 by a user. The operation unit 70 is a user interface for entering information to the PC 1 by the user, and an example of the operation unit 70 includes a keyboard and a mouse.

As the CPU 10 performs arithmetic operations in accordance with a program loaded into the RAM 20 from the ROM 30, the HDD 40, or a recording medium such as an optical disc (not illustrated) under the above mentioned hardware configuration, a software control unit is configured. Functions of the PC 1 according to the present embodiment are embodied by a combination of the configured software control unit and the hardware.

Next, a structure of the 3D printer 2 will be described with reference to FIG. 3. The 3D printer 2 according to the present embodiment includes a flat base 211 on which a filament is layered, a discharging head 201 for discharging a filament on the base 211, and an arm 202 for moving the discharging head 201 in a space above the base 211.

As mentioned earlier, the 3D printer 2 discharges a filament from the discharging head 201 to form each layer of a solid object to be formed, in accordance with a sliced image of each layer generated by horizontally slicing a three-dimensional shape of the solid object determined by entered modeling data, and deposits each layer sequentially to form the solid object. Specifically, a filament is discharged from the discharging head 201 to a position corresponding to image data of the sliced image. As a result, a part where a filament is discharged becomes a shape corresponding to image data of the sliced image. That is, the discharging head 201 and the arm 202 acts as a filament discharging unit for selectively discharging a filament to a position determined based on information of a three-dimensional shape of a 3D model to be formed.

When forming of one layer is completed, a new filament layer is formed on a layer which has already been formed. By repeating the operation to deposit layers formed by discharging a filament sequentially, a solid object is formed. That is, the base 211 acts as a stage when a filament is discharged.

Note that a hardware configuration of the 3D printer 2 is also similar to the hardware configuration of the PC 1 described with reference to FIG. 2. The 3D printer 2 receives a control from the PC 1 by an information processing function embodied by the hardware configuration. Also, by a controller 220 (to be described below) embodied by the information processing function, movement of the arm 202 or discharge of a filament from the discharging head 201 is controlled.

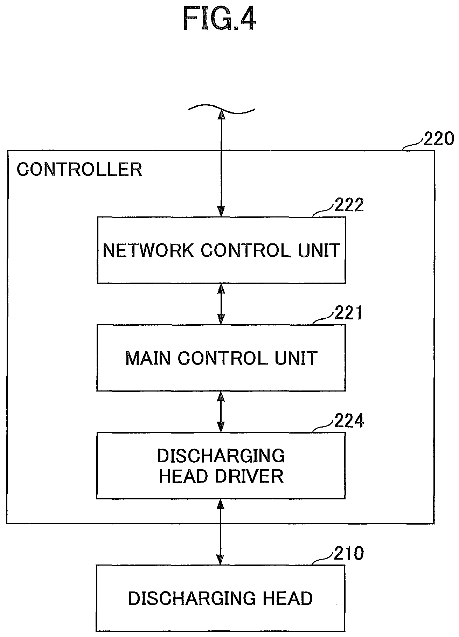

Next, with reference to FIG. 4, an example of configuration of control blocks of the 3D printer 2 according to the present embodiment will be described. As illustrated in FIG. 4, the 3D printer 2 according to the present embodiment includes not only the discharging head 201 but also the controller 220 for controlling the discharging head 201.

The controller 220 includes a main control unit 221, a network control unit 222, and a discharging head driver 224. The main control unit 221 has a function to control the controller 220 in entirety, and is embodied by the CPU in the 3D printer 2 performing arithmetic operations in accordance with an OS or an application program. The network control unit 222 is an interface of the 3D printer 2 to exchange information with other equipment such as the PC 1, and an Ethernet (registered trademark) interface or a USB (Universal Serial Bus) interface is used as the network control unit 222. The discharging head driver 224 is driver software for driving the discharging head 201. The discharging head driver 224 performs driving of the discharging head 201 by a control of the main control unit 221.

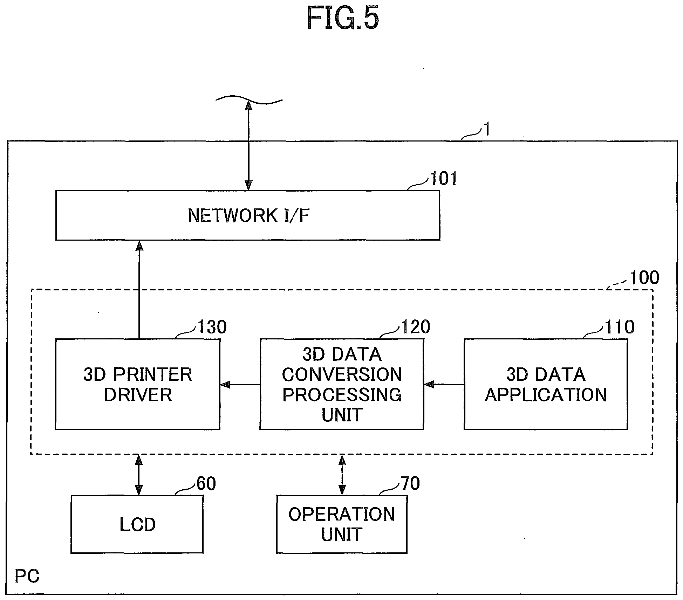

Next, with reference to FIG. 5, an example of configuration of function blocks of the PC 1 according to the present embodiment will be described. As illustrated in FIG. 5, the PC 1 according to the present embodiment includes a controller 100 and a network I/F 101, in addition to the LCD 60 and the operation unit 70 described with reference to FIG. 2. The network I/F 101 is an interface for communicating the PC 1 with other equipment via a network, and an Ethernet (registered trademark) interface or a USB (Universal Serial Bus) interface is used as the network I/F 101.

The controller 100 is embodied by the CPU 10 performing arithmetic operations in accordance with an OS or an application program, and acts as a control unit for controlling the PC 1 in entirety. As illustrated in FIG. 5, the controller 100 includes a 3D data application 110, a 3D data conversion processing unit 120, and a 3D printer driver 130.

The 3D data application 110 is application software such as CAD software, to process data expressing a 3-dimensional shape of an object. The 3D data conversion processing unit 120 is a 3D information processing unit performing a process for converting entered 3D data. That is, a program embodying the 3D data conversion processing unit 120 is an example of an information processing program.

An input of 3D data to the 3D data conversion processing unit 120 is performed by the 3D data conversion processing unit 120 obtaining data entered into the PC 1 via a network, or by the 3D data application 110 calling a function of the 3D data conversion processing unit 120. Alternatively, the input may be performed by the 3D data conversion processing unit 120 obtaining file path data specified by a user operating the operation unit 70.

The 3D data conversion processing unit 120 analyzes the obtained 3D data, and creates modeling data such as toolpath by converting the 3D data. The 3D data conversion processing unit 120 according to the present embodiment creates modeling data such that, when a 3D model having a three-dimensional shape represented by the input 3D data is formed on the base 211, a gap region formed between filaments becomes small or a gap region is not created. That is, the PC 1 including the 3D data conversion processing unit 120 is an example of an information processing device. Details will be described below.

The 3D printer driver 130 is a software module for controlling an operation of the 3D printer 2 by the PC 1, and may have functions similar to general purpose driver software for a 3D printer. A function embodied by the 3D printer driver 130 is based on a function implemented in a printer driver of a generic printer for paper. The 3D printer driver 130 generates data (hereinafter referred to as "slice data") of the cross-sectional shape of each layer of a 3D model formed by cutting a three-dimensional shape of the 3D model represented by 3D data into slices, and sends the slice data to the 3D printer 2 with control information.

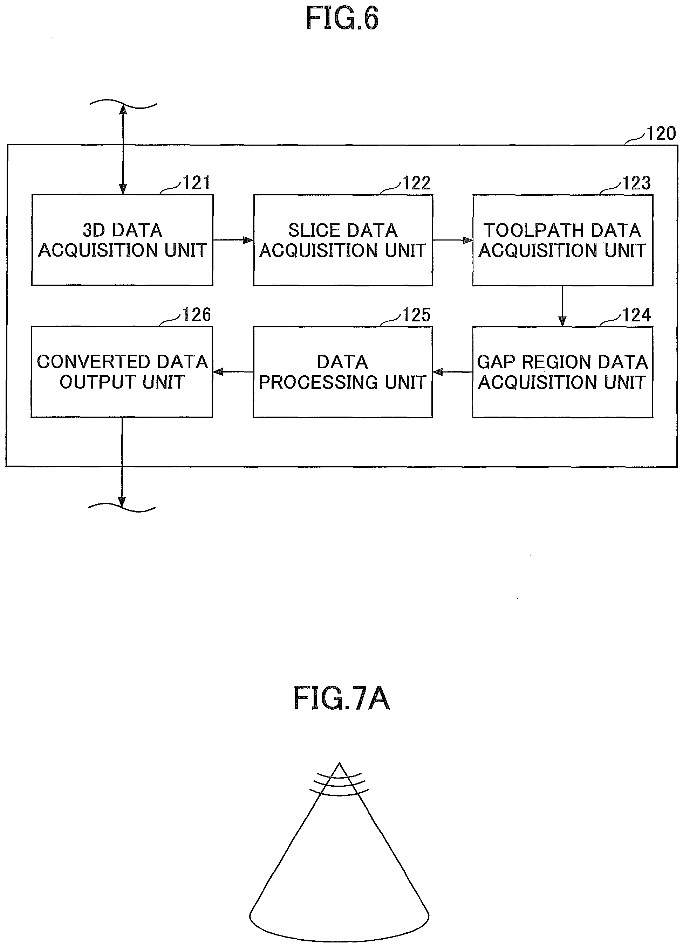

Next, functions of the 3D data conversion processing unit 120 will be described with reference to FIG. 6. As illustrated in FIG. 6, the 3D data conversion processing unit 120 according to the present embodiment includes a 3D data acquisition unit 121, a slice data acquisition unit 122, a toolpath data acquisition unit 123, a gap region data acquisition unit 124, a data processing unit 125, and a converted data output unit 126.

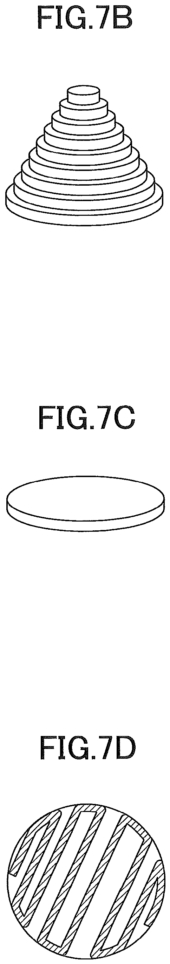

The 3D data acquisition unit 121 generates and acquires 3D data of a 3D model, as illustrated in FIG. 7A for example, which is entered into the 3D data conversion processing unit 120. That is, the 3D data acquisition unit 121 is an example of a three-dimensional information acquisition unit. As mentioned earlier, 3D data is information representing a three-dimensional shape of a 3D model to be formed. The slice data acquisition unit 122 analyzes the 3D data acquired by the 3D data acquisition unit 121, slices the 3D data by a constant pitch, such as a pitch equal to a thickness of a filament discharged on the base 211, in a Z-axis direction or a vertical direction, generates data of cross-sectional shape of the 3D data at each Z coordinate that is obtained by the slicing, such as slice data of each layer as illustrated in FIG. 7B, and acquires the data. That is, the slice data is an example of layer information, and the slice data acquisition unit 122 is an example of a layer information generating unit.

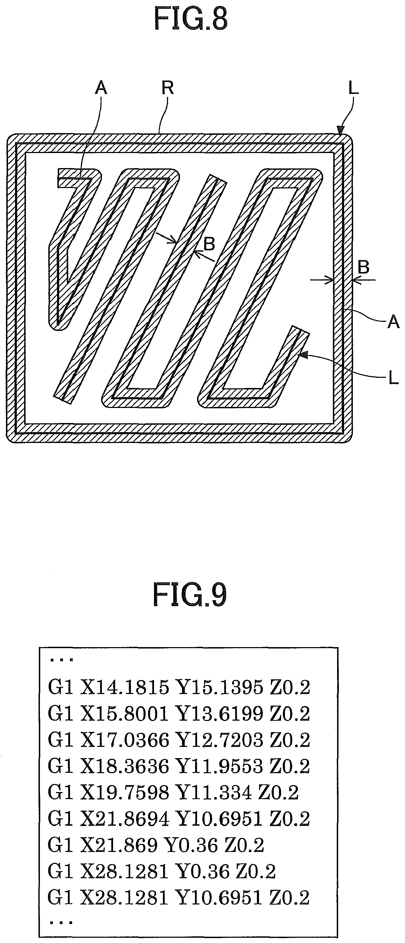

The toolpath data acquisition unit 123 is an example of a deposition information generating unit, and for each of the layers represented by the slice data acquired by the slice data acquisition unit 122, the toolpath data acquisition unit 123 generates, from slice data of a layer as illustrated in FIG. 7C for example, data of a trajectory (hereinafter referred to as "toolpath data") for drawing an outline of the slice data and an interior of the slice data with at least a single stroke, as illustrated in FIG. 7D for example. The toolpath data acquisition unit 123 performs generating toolpath data for each layer. The toolpath data is an example of deposition information. The toolpath data includes, as illustrated in FIG. 8, information representing a route A of the toolpath, which is a set of coordinates data for drawing a trajectory, information indicating a width B of the toolpath, which is a width of a filament discharged from the discharging head 201 of the 3D printer 2, and information indicating other setting values for forming a 3D model by the 3D printer 2. The information representing the route A of the toolpath also includes a predetermined constant bending angle (to be described below) for bending a driving direction of the toolpath.

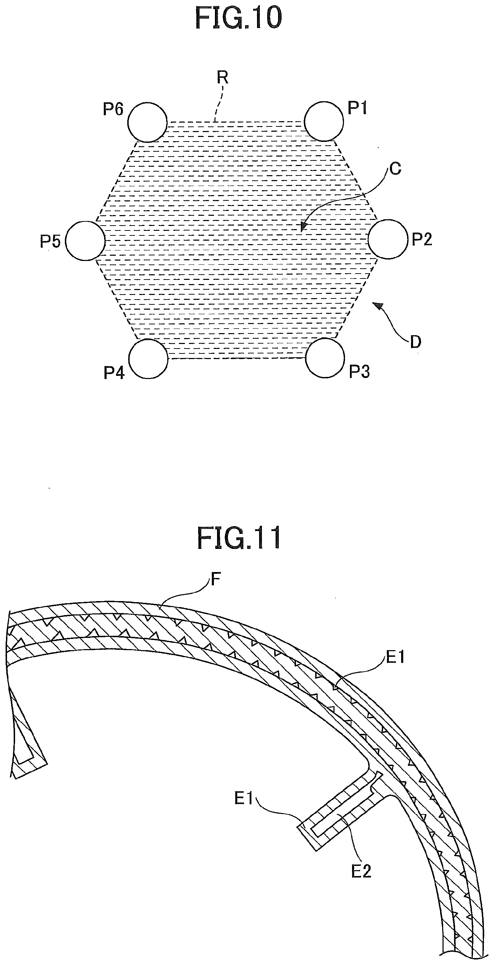

The information representing the route A of the toolpath contained in the toolpath data includes, as illustrated in FIG. 9 for example, a route of the toolpath (X, Y, and Z coordinates). When a 3D model is formed by the 3D printer 2, the discharging head 201 of the 3D printer 2 is driven in accordance with the coordinates of each row. The information indicating the width B of the toolpath includes, for example, two values of speeds: a moving speed of the discharging head 201 and a discharging speed of a filament. In this case, the width B of the toolpath is determined by the two values of speeds. The toolpath data also includes contour information G representing an outline R. The contour information G is a set of coordinates data separating an internal region C of a 3D model (where a filament is discharged) and an external region D (where a filament is not discharged). For example, the contour information G is a set of vertex coordinates as illustrated in FIG. 10 (P0, P1,..., P5).

The gap region data acquisition unit 124 converts toolpath data into image data, detects a gap pixel by classifying the image data, detects a gap region based on the detected gap pixel, generates gap region data representing the detected gap region, and obtains the gap region data. That is, the gap region data acquisition unit 124 is an example of a gap region information generating unit.

Based on the toolpath data acquired by the toolpath data acquisition unit 123 and the gap region data acquired by the gap region data acquisition unit 124, the data processing unit 125 generates gap suppression control data for reducing a size of a gap region which may occur between filaments when creating a 3D model with the 3D printer 2, or preferably for eliminating the gap region. The gap suppression control data is data for performing control of enlarging a thickness or width of a filament to be discharged on the base 211, by, for example, reducing a moving speed of the discharging head 201, increasing a discharging speed of a filament discharged from the discharging head 201, or the like. The data processing unit 125 also generates discharging information (that is, modeling data) for controlling discharge of a filament, by adding the gap suppression control data to the toolpath data. That is, the data processing unit 125 is an example of a discharging information generating unit.

The converted data output unit 126 outputs, to the 3D printer driver 130, the modeling data generated by the data processing unit 125 by adding the gap suppression control data to the toolpath data. That is, the converted data output unit 126 is an example of a 3D information output unit. The 3D printer driver 130 creates a job for operating the 3D printer 2 based on the modeling data, and sends data representing the job to the 3D printer 2.

As described above, the 3D data conversion processing unit 120 according to the present embodiment generates gap suppression control data based on toolpath data. In a case in which gap regions E1, E2, and the like are expected to be formed between filaments F as illustrated in FIG. 11 when creating a 3D model with the 3D printer 2, the gap suppression control data can make the gap regions E1, E2, etc. between filaments F small, or can eliminate the gap regions. Accordingly, forming a 3D model can be performed more precisely.

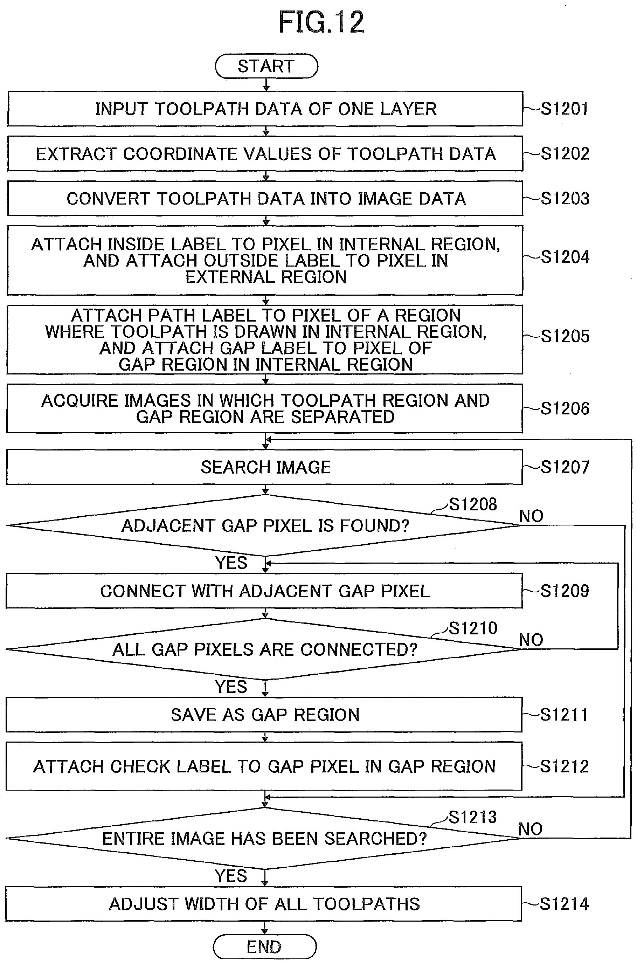

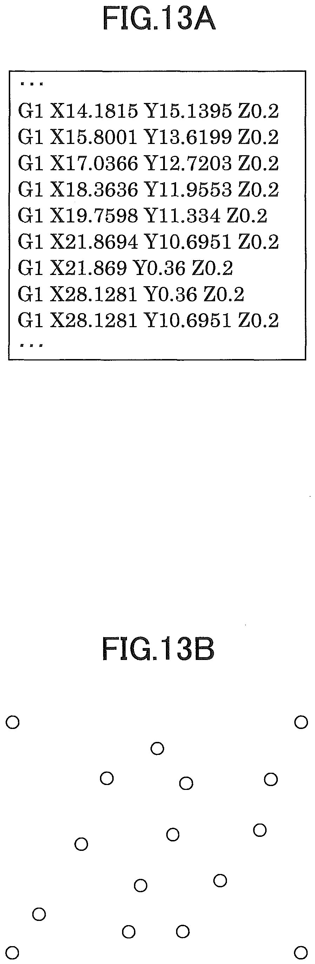

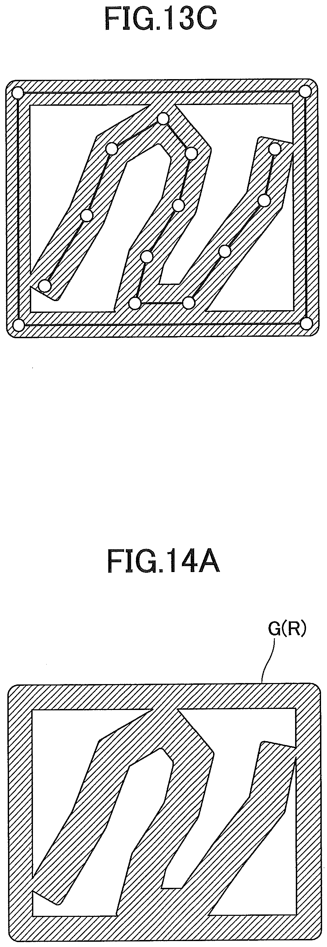

Next, an operation of a system according to the present embodiment will be described. FIG. 12 is a flowchart illustrating an operation of the gap region data acquisition unit 124 and the data processing unit 125 according to the present embodiment. As illustrated in FIG. 12, first, toolpath data corresponding to one layer is entered to the gap region data acquisition unit 124 (step S1201). The gap region data acquisition unit 124 converts coordinates data included in the toolpath data, which is an X value and a Y value of coordinates as illustrated in FIG. 13A, into pixel data on an image (step S1202). In this case, a size of the image is set such that the 3D printer 2 can form. Subsequently, the gap region data acquisition unit 124 obtains image data for each layer, by generating route data having a predetermined width B of the toolpath as illustrated in FIG. 13C by connecting these pixel data (step S1203).

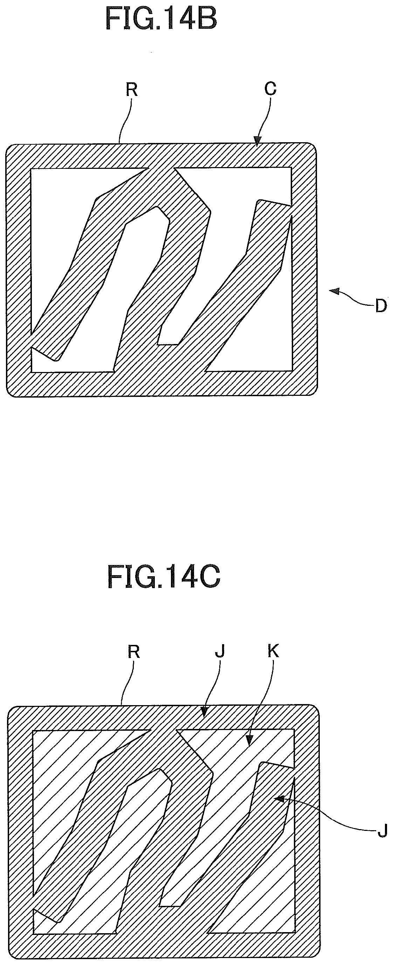

Next, the gap region data acquisition unit 124 detects a gap pixel by classifying the image data generated at step S1203. For example, as illustrated in FIG. 14A, the gap region data acquisition unit 124 acquires contour information G representing an outline R of the entire toolpath illustrated in FIG. 14A. Subsequently, based on the acquired contour information G, the gap region data acquisition unit 124 classifies the image data generated at step S1203 into an internal region C and an external region D illustrated in FIG. 14B, attaches an inside label to a pixel positioned in the internal region C, and attaches an outside label to a pixel positioned in the external region D (step S1204). The gap region data acquisition unit 124 also attaches a path label to a pixel positioned in a toolpath region J, which represents a region in the internal region C where the toolpath is drawn, and attaches a gap label to a pixel positioned in a gap region K, which represents a region in the internal region C where the toolpath is not drawn, as illustrated in FIG. 14C. By performing the above operations, the gap region data acquisition unit 124 classifies the internal region C into the toolpath region J and the gap region K (step S1205). A pixel to which a gap label is attached here is a gap pixel.

Afterward, the gap region data acquisition unit 124 detects image data related to the gap region K from image data of the gap pixels included in the gap region K detected at step S1205. That is, the gap region data acquisition unit 124 generates and acquires an image including only the toolpath region J and the gap region K separated from the image data obtained at step S1203 (step S1206). Next, the gap region data acquisition unit 124 searches the image (step S1207), and out of the gap pixels having gap labels, the gap region data acquisition unit 124 extracts all pixels adjacent to another gap pixel (step S1208). As a result of the search, if an adjacent gap pixel is not found (step S1208/NO), a process of the gap region data acquisition unit 124 proceeds to step S1213 to be described below. On the other hand, if all adjacent gap pixels are found (step S1208/YES) as a result of the search, the gap region data acquisition unit 124 connects the gap pixel with the adjacent gap pixel(s) (step S1209).

Next, the gap region data acquisition unit 124 determines if all adjacent gap pixels are connected or not (step S1210). If not all adjacent gap pixels are connected (step S1210/NO), the process of the gap region data acquisition unit 124 reverts to step S1209, and the gap region data acquisition unit 124 repeats a process to connect the extracted gap pixel to adjacent gap pixel. On the other hand, if all adjacent gap pixels are connected (step S1210/YES), the gap region data acquisition unit 124 determines a region covered with all of the connected gap pixels as a single gap region, and saves size information of the determined gap region and location information of the determined gap region, as gap region data (step S1211). The gap region data mentioned here is an example of gap region information.

Next, the gap region data acquisition unit 124 attaches a check label to each of the gap pixels located in the gap region corresponding to the gap region data saved at step S1211 (step S1212). Next, the gap region data acquisition unit 124 determines if all gap pixels in the image acquired at step S1206 have been searched for (step S1213). If not all gap pixels have been searched for (step S1213/NO), the process of the gap region data acquisition unit 124 reverts to step S1207, and the gap region data acquisition unit 124 repeats steps from step S1207 to step S1212. When repeating the steps, the gap region data acquisition unit 124 regards a pixel having a check label attached as a processed pixel, and excludes the pixel from a processing target of the steps. After all gap pixels has been searched for (step S1213/YES), the process of the gap region data acquisition unit 124 proceeds to step S1214.

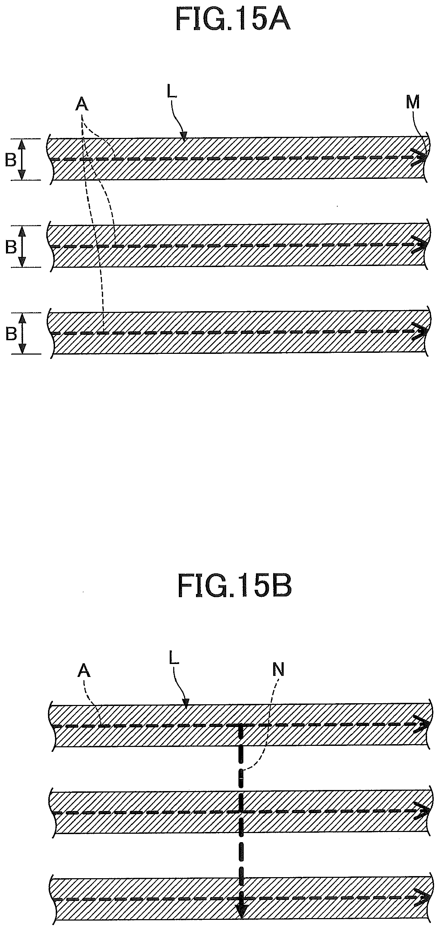

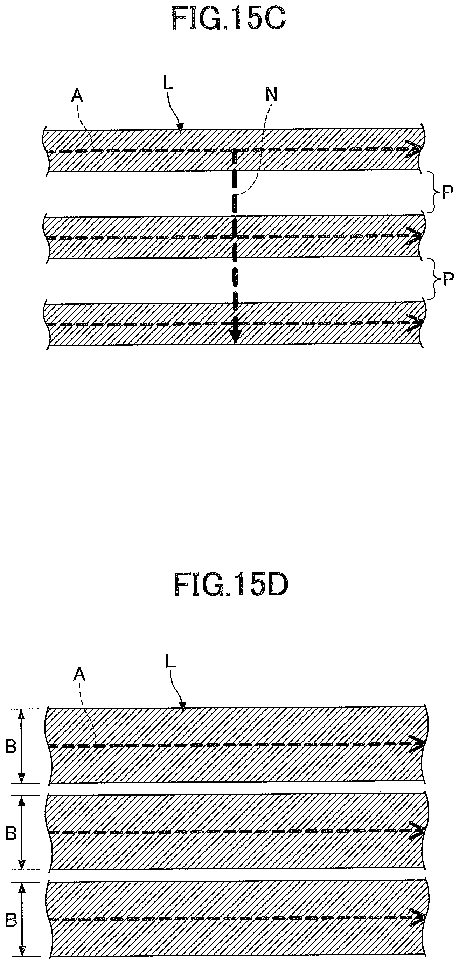

At step S1214, the data processing unit 125 reduces a size of the gap region K corresponding to the gap region data saved at step S1211, or preferably eliminates the gap region K, by expanding width of all toolpaths (step S1214). The data processing unit 125 at step S1214 adjusts width of all the toolpaths to expand the width of all the toolpaths, based on a size (width P to be described below) of each gap region. In a case in which multiple gap regions are present, the data processing unit 125 determines a width B after adjustment (to be described later) of the toolpaths based on a size (width P) of the largest (having a maximum width P) gap region among the multiple gap regions. During the adjustment, the data processing unit 125 extracts a perpendicular direction element N that is perpendicular to a driving direction M of toolpath L adjacent to a gap region K, as illustrated in FIG. 15A and FIG. 15B, and calculate a width P, which is a length (width) of the gap region K in a direction of the perpendicular direction element N (see FIG. 15C). Next, based on the calculated width P, the width B after adjustment of all the toolpaths L is determined.

Next, the data processing unit 125 obtains data concerning the adjustment of the toolpath width performed at step S1214, as the gap suppression control data, and adds the obtained gap suppression control data to the toolpath data, to generate modeling data which is discharging information for controlling discharge of a filament.

And then, when a user instructs, by operating the operation unit 70, to start forming a solid object by the 3D printer 2, the converted data output unit 126 outputs the modeling data generated by the data processing unit 125. The 3D printer driver 130 having received the modeling data generates data of a job for causing the 3D printer 2 to perform forming a solid object, and transmits the data to cause the 3D printer 2 to perform forming a solid object. By performing the above process, the entire operation of the system according to the present embodiment is completed.

Next, an operation of the 3D printer 2 having received data of a job will be described. The main control unit 221 in the controller 220 controls the discharging head driver 224 based on the data of the job, and moves the discharging head 201 to a predetermined position above the base 211 using the arm 202. After driving the discharging head 201, the main control unit 221 refers to the modeling data, and causes the discharging head 201 to discharge a filament on the base 211 while driving the discharging head 201 using the arm 202 based on the toolpath data of the lowest layer. After completing discharge of a filament corresponding to one layer, the main control unit 221 repeats the discharge operation of a filament until the discharge for every layer is completed. By performing the above process, the operation of the 3D printer 2 having received data of a job is completed.

As described above, the solid object modeling system according to the present embodiment determines a gap region that may occur between filaments when a 3D model is formed by discharging a filament based on toolpath data, and generates gap suppression control data for reducing a size of the gap region, or preferably eliminating the gap region, by increasing a width of toolpath. As a result, it is possible to control the 3D printer 2 to reduce a size of a gap between filaments or eliminate the gap, when it is predicted that a gap region is generated between filaments. Accordingly, because an occurrence of deformation, caused by a gap region occurring between filaments of a 3D model formed by the 3D printer, can be reduced, forming of a 3D model by the 3D printer can be performed more precisely.

### [Second Embodiment]

The solid object modeling system according to the first embodiment reduces sizes of, or preferably eliminates, all gap regions detected based on gap pixels. The solid object modeling system according to a second embodiment differs from that of the first embodiment in that the solid object modeling system according to a second embodiment is configured such that a user sets a threshold of an area of a gap region to be processed in advance by inputting the threshold using the operation unit 70 of the PC 1, and in that the solid object modeling system according to the second embodiment reduces a size of detected gap region, or preferably eliminates the detected gap region, only when the detected gap region has a larger area than the threshold.

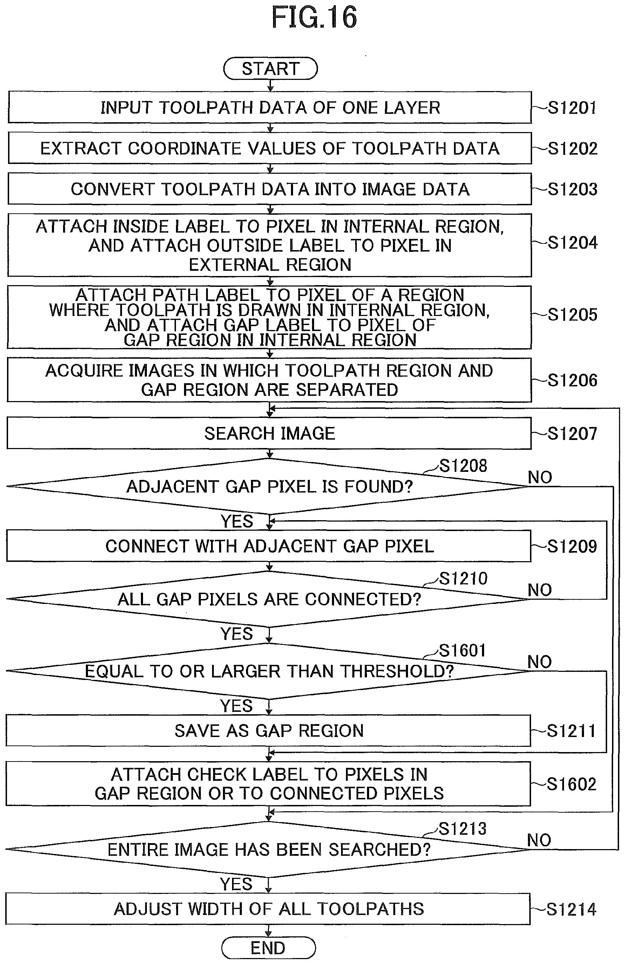

FIG. 16 is a flowchart illustrating an operation of the gap region data acquisition unit 124 and the data processing unit 125 according to the present embodiment. In the following description, regarding a process similar to that in the first embodiment, a same number as a number attached to that in the first embodiment is attached, and the description of the process may be omitted.

In the present embodiment, as illustrated in FIG. 16, when all adjacent gap pixels are connected (step S1210/YES), the gap region data acquisition unit 124 determines if an area of a region covered with the connected gap pixels is equal to or larger than the predetermined threshold or not (step S1601). If the area of the region covered with the connected gap pixels is equal to or larger than the predetermined threshold (step S1601/YES), a process of the gap region data acquisition unit 124 proceeds to step 1211, in which the gap region data acquisition unit 124 determines the region covered with the connected gap pixels as a gap region, and saves size information of the determined gap region and location information of the determined gap region, as gap region data. The saved gap region data is gap region data corresponding to a gap region covered with the connected gap pixels having an area equal to or larger than the predetermined threshold, and is an example of threshold gap region information. Next, the process proceeds to step S1602, in which the gap region data acquisition unit 124 attaches a check label to each of the pixels located in the gap region corresponding to the gap region data saved at step S1211. After step S1602, the process proceeds to step S1213. If the area of the region covered with the connected gap pixels is smaller than the predetermined threshold (step S1601/NO), the process also proceeds to step S1602, in which the gap region data acquisition unit 124 attaches a check label to each of the connected gap pixels, and the process proceeds to step S1213. Processes to be performed at step S1213 and thereafter are similar to the processes described in the first embodiment.

As described above, the solid object modeling system according to the present embodiment determines a region made by connecting gap pixels as a gap region only when an area of the region is equal to or larger than the threshold, and reduces a size of the gap region, or preferably eliminates the gap region, by increasing a width of toolpath. Accordingly, because a process for a region made by connecting gap pixels having smaller area than the threshold can be omitted, the number of the gap regions to be processed can be lessened and a processing speed for forming modeling data can be improved.

### [Third Embodiment]

The solid object modeling system according to the first embodiment reduces sizes of gaps, or preferably eliminates gaps, by adjusting width of all toolpaths based on gap region data. In the solid object modeling system according to a third embodiment, instead of adjusting width of all toolpaths, a process of reducing a size of the gap region or preferably eliminating the gap region is performed with respect to a part of a toolpath adjacent to a gap region.

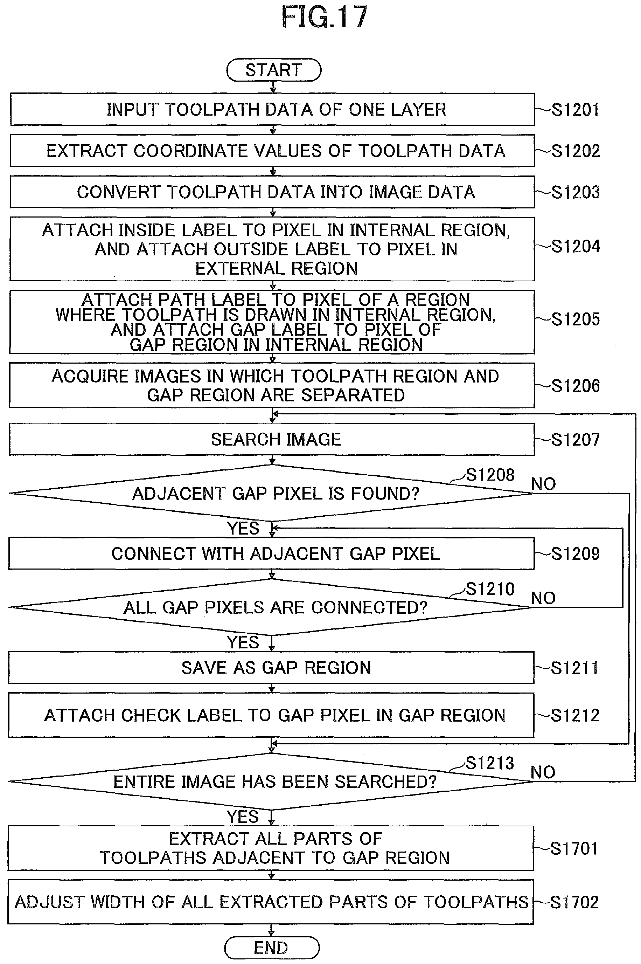

FIG. 17 is a flowchart illustrating an operation of the gap region data acquisition unit 124 and the data processing unit 125 according to the present embodiment. In the following description, regarding a process similar to that in the first embodiment, a same number as a number attached to that in the first embodiment is attached, and the description of the process may be omitted.

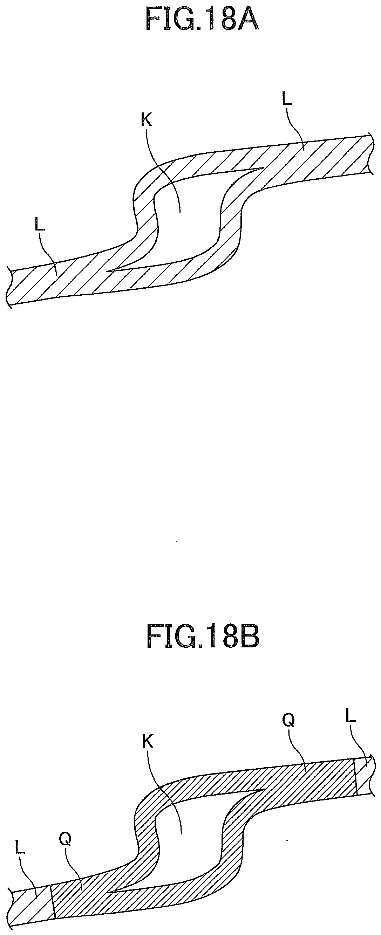

As illustrated in FIG. 17, when the gap region data acquisition unit 124 completes searching for all gap pixels included in an entire image at step S1213, the data processing unit 125 executes step S1701. At step S1701, the data processing unit 125 acquires location information of gap regions corresponding to all gap region data saved at step S1211, and, as illustrated in FIG. 18A and FIG. 18B, the data processing unit 125 extracts, out of toolpaths L, a part Q adjacent to each gap region K (step S1701). That is, at step S1701, as illustrated in FIG. 18A and FIG. 18B, the data processing unit 125 extracts, out of all toolpaths L in the internal region, all parts Q of the toolpaths L adjacent to the gap region K. Information of these parts Q of the toolpaths L mentioned here is an example of discharge region information related to a part of filamentary molding material adjacent to a gap region.

Then, the process proceeds to step S1702, and, with respect to all parts Q of the toolpaths L extracted at step S1701, the data processing unit 125 adjusts width of the toolpaths L in accordance with the procedure mentioned above with reference to FIGS. 15A to 15D, by extracting a perpendicular direction element N that is perpendicular to a driving direction M of the toolpaths L, calculating a width P of the gap region K in a direction of the perpendicular direction element N, and determining the width B after adjustment of the toolpaths L based on the calculated width P (step S1702).

Next, the data processing unit 125 obtains data concerning the adjustment of the toolpath width performed at step S1701, as the gap suppression control data, and adds the obtained gap suppression control data to the toolpath data, to generate modeling data which is discharging information for controlling discharge of a filament.

As described above, the solid object modeling system according to the present embodiment extracts a part Q adjacent to a gap region K among toolpaths L, and with respect to the extracted part Q of the toolpaths L, a width of the toolpaths L is adjusted locally. Accordingly, a width of a part of the toolpath L that is not adjacent to the gap region is not adjusted. As a result, processing speed for forming modeling data can be improved. Further, because the width of the part of the toolpaths L other than the part Q adjacent to the gap region K is not adjusted, quality of a 3D model formed by the 3D printer 2 can be improved.

### [Fourth Embodiment]

The solid object modeling system according to the first embodiment reduces a size of a gap region, or preferably eliminates a gap region, by adjusting a width of a toolpath based on a gap region related to gap region data. In the solid object modeling system according to a fourth embodiment, if there is a limitation of an increase in width of a toolpath to reduce a size of a gap region or preferably eliminate a gap region, or if a gap region cannot decrease in size or cannot preferably be eliminated, a new toolpath is added to the gap region to reduce a size of the gap region or preferably to eliminate the gap region.

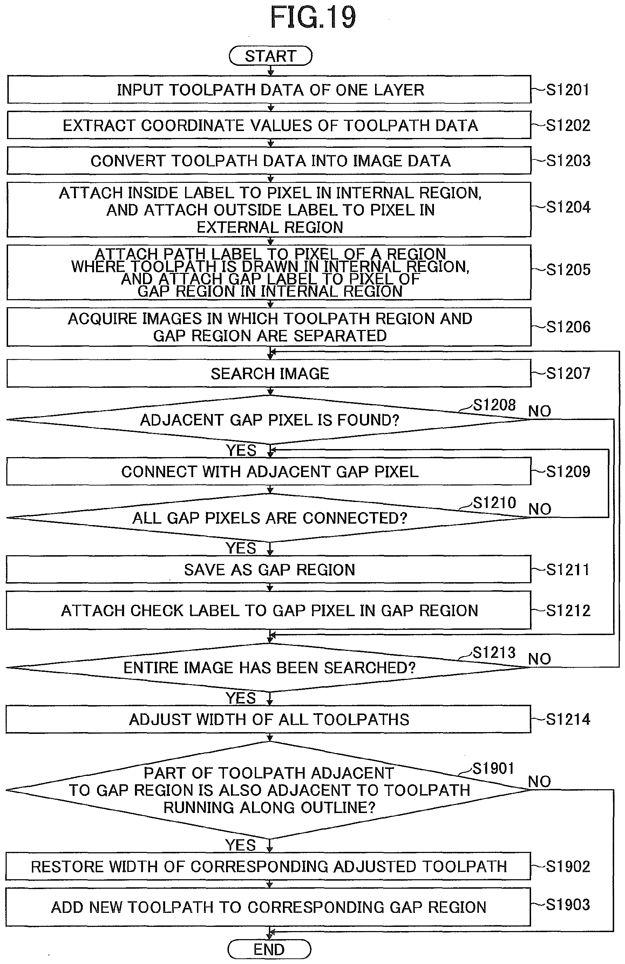

FIG. 19 is a flowchart illustrating an operation of the gap region data acquisition unit 124 and the data processing unit 125 according to the present embodiment. In the following description, regarding a process similar to that in the first embodiment, a same number as a number attached to that in the first embodiment is attached, and the description of the process may be omitted.

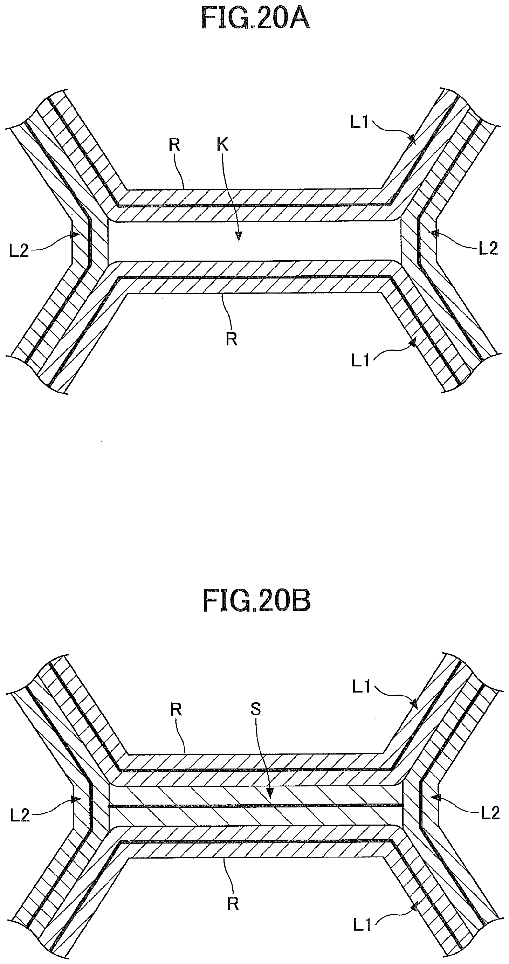

As illustrated in FIG. 19, after width of all toolpaths L has been adjusted at step S1214 to reduce sizes of gap regions K corresponding to all the gap region data or to preferably eliminate the gap regions K corresponding to all the gap region data, the data processing unit 125 determines if part of a toolpath L2 (that is, a part of a region disclosed in FIG. 20A) adjacent to a gap region K is also adjacent to a toolpath L1 running along an outline R, as illustrated in FIG. 20A (step S1901). If the part of the toolpath L2 adjacent to the gap region K is also adjacent to the toolpath L1 running along the outline R, as illustrated in FIG. 20A (step S1901/YES), the data processing unit 125 restores a width of the part of the toolpath L2 to a width before adjustment (step S1902). Subsequently, as illustrated in FIG. 20B, the data processing unit 125 adds a new toolpath S to the gap region K whose adjacent toolpath L2 is also adjacent to the toolpath L1 running along the outline R (step S1903). When the toolpath S is added, in accordance with a width of the gap region K to which the toolpath S is added, a width of the toolpath S may be expanded, or multiple toolpaths S may be added.

Next, the data processing unit 125 obtains, as gap suppression control data, each of the data concerning the adjustment of the toolpath width performed at step S1214 and the data concerning the addition of the toolpath S performed at step S1903, and adds the obtained gap suppression control data to the toolpath data, to generate modeling data which is discharging information for controlling discharge of a filament.

Conversely, if part of the toolpath L2 adjacent to the gap region K is not adjacent to the toolpath L1 running along the outline R (step S1901/NO), the data processing unit 125 obtains data concerning the adjustment of the toolpath width performed at step S1214, as the gap suppression control data, and adds the obtained gap suppression control data to the toolpath data, to generate modeling data which is discharging information for controlling discharge of a filament.

If a width of a toolpath L1 running along an outline R of modeling data were expanded, displacement of a toolpath from the outline R would occur when forming a 3D model, and unevenness might be formed on a surface of the formed 3D model. Therefore, there is a certain limitation in an adjustable range of a width of the toolpath L1. Further, even if a width of a toolpath L2 adjacent to the toolpath L1 running along the outline R were expanded in order to reduce a size of a gap region K between the toolpaths L2 or preferably to eliminate the gap region K, the size of the gap region K might not decrease, as illustrated in FIG. 20A.

Note that a case as illustrated in FIG. 20A is an example of a case in which a 3D model is double y-shaped, has a narrow part, and a gap region is formed in the narrow part.

In the solid object modeling system according to the present embodiment, the data processing unit 125 determines if part of a toolpath L2 adjacent to a gap region K, whose width has been adjusted, is also adjacent to a toolpath L1 running along an outline R. If the part of the toolpath L2 adjacent to the gap region K is also adjacent to the toolpath L1 running along the outline R, a new toolpath S in accordance with a width of the gap region K is added to the gap region K to which the toolpath L2 is adjacent. Accordingly, in a case in which unevenness might be formed on a surface of the formed 3D model even if a width of a toolpath L1 were expanded, or in a case a gap region K might not be reduced in size or eliminated even if a width of a toolpath L2 were expanded, the solid object modeling system according to the present embodiment can reduce a size of the gap region K or can eliminate the gap region. As a result, quality of a surface of a 3D model can be improved, and forming of a 3D model by the 3D printer 2 can be performed more precisely.

### [Fifth Embodiment]

The solid object modeling system according to the first embodiment reduces a size of a gap region, or preferably eliminates a gap region, by adjusting a width of a toolpath. However, in the solid object modeling system according to a fifth embodiment, by changing a route of a toolpath, a size of the gap region is reduced or preferably the gap region is eliminated.

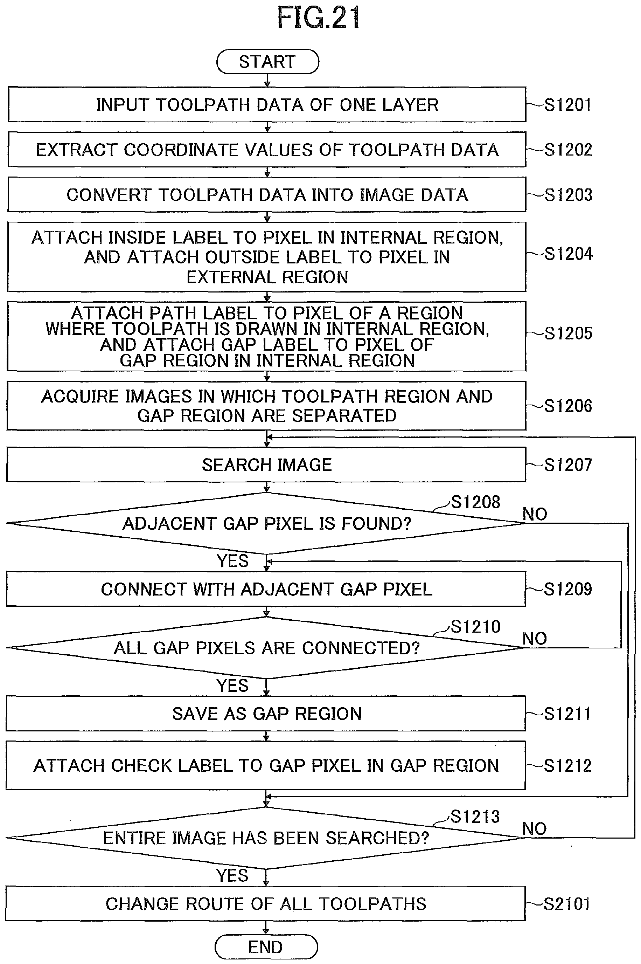

FIG. 21 is a flowchart illustrating an operation of the gap region data acquisition unit 124 and the data processing unit 125 according to the present embodiment. In the following description, regarding a process similar to that in the first embodiment, a same number as a number attached to that in the first embodiment is attached, and the description of the process may be omitted.

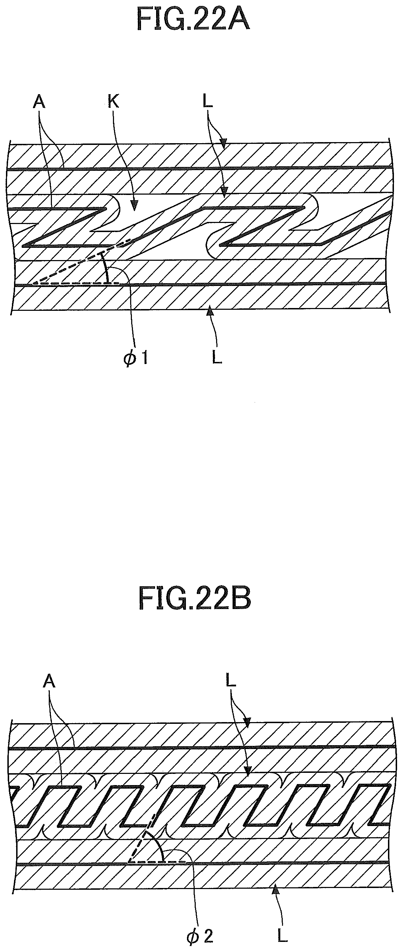

As illustrated in FIG. 21, when the gap region data acquisition unit 124 completes searching for all gap pixels included in an entire image at step S1213, the data processing unit 125 changes a route A of all toolpaths to reduce a size of the gap region K corresponding to the gap region data saved at step S1211, or preferably to eliminate the gap region K (step S2101). That is, at step S2101, the data processing unit 125 enlarges bending angles of the route A of all the toolpaths L, for example, a bending angle Φ1 of 45 degrees is changed to a bending angle Φ2 of 60 degrees, as illustrated in FIGS. 22A and 22B. Each of these bending angles Φ1 and Φ2 is a value used for generating toolpath data, and is a predetermined value.

Next, the data processing unit 125 obtains, as gap suppression control data, data concerning the adjustment of the bending angles of the toolpaths performed at step S2101, and adds the obtained gap suppression control data to the toolpath data, to generate modeling data which is discharging information for controlling discharge of a filament.

As described above, in forming toolpath data, a gap region K may be formed between toolpaths L depending on a bending angle Φ1 of the toolpath L as illustrated in FIG. 22A. Therefore, in the present embodiment, by expanding a bending angle Φ1 of a route A of the toolpath L into a bending angle Φ2, the gap region K is reduced in size or preferably is eliminated. As a result, a size of a gap region E1, which may be formed between filaments F when a 3D model is formed by the 3D printer, can be reduced, or preferably the gap region can be eliminated. Accordingly, forming of a 3D model can be performed more precisely.

### [Sixth Embodiment]

The solid object modeling system according to the first embodiment detects a gap region K by performing an extraction of a gap pixel in an image on a pixel-by-pixel basis. In a solid object modeling system according to the sixth embodiment, a search of a gap region K in an image is conducted by using a search region T having a predetermined fixed shape and area.

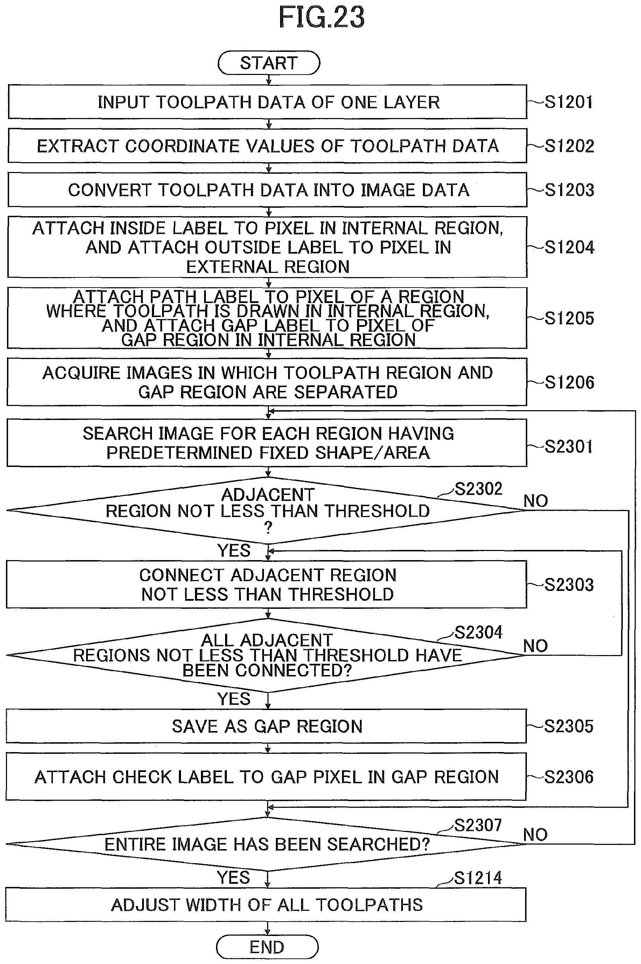

FIG. 23 is a flowchart illustrating an operation of the gap region data acquisition unit 124 and the data processing unit 125 according to the present embodiment. In the following description, regarding a process similar to that in the first embodiment, a same number as a number attached to that in the first embodiment is attached, and the description of the process may be omitted.

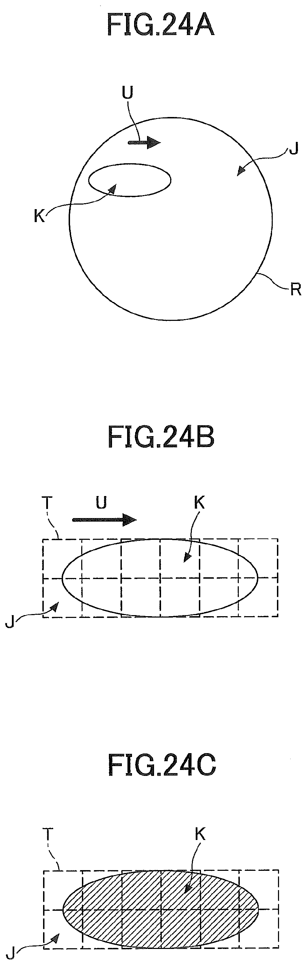

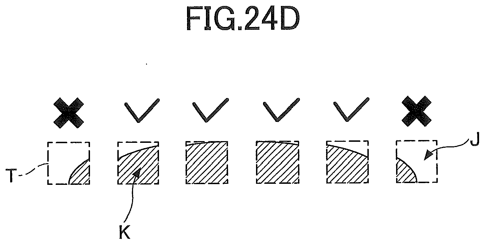

As illustrated in FIG. 23, after the gap region data acquisition unit 124 acquires, at step S1206, an image including only the toolpath region J and the gap region K as illustrated in FIG. 24A, the gap region data acquisition unit 124 searches for a gap region K in the image, for each search region T having a predetermined shape and area (in a case illustrated in FIG 23B, a square corresponds to a search region T) (step S2301). Next, the gap region data acquisition unit 124 calculates, as illustrated in FIG. 24C and FIG. 24D, for each search region T, a ratio of gap pixels to the number of all pixels in the search region T, and extracts all search regions T whose calculated ratio of gap pixels is not less than a predetermined threshold and which are adjacent to another search region T of which the calculated ratio of gap pixels is not less than the predetermined threshold (step S2302). An example will be described in the following. Six search regions T illustrated in FIG. 24D correspond to six search regions T illustrated on the upper side of FIG. 24C. Among the six search regions T illustrated in FIG. 24D, four search regions T excluding search regions at both ends are search regions having a ratio of gap pixels to the number of all pixels in one search region T larger than the predetermined threshold. If there is no adjacent search region T having a gap pixel ratio not less than the predetermined threshold (step S2302/NO), the process proceeds to step S2307, and the gap region data acquisition unit 124 determines whether the search is completed in every search region T included in the image acquired at step S1206. If the search has not been carried out in every search region T (step S2307/NO), the process reverts to step S2301, and the gap region data acquisition unit 124 conducts search of a gap region K with respect to a search region T adjacent, in a scanning direction U as illustrated in FIG. 24B, to the search region T in which the search has been carried out most recently, in a similar manner as described above.

If all adjacent search regions T having the gap pixel ratio not less than the predetermined threshold are extracted (step S2302/YES), the gap region data acquisition unit 124 recognizes that an entirety of all the search regions T extracted at step S2302 is a part of the gap region K, and connects the search regions T with adjacent search regions T having the gap pixel ratio not less than the predetermined threshold (step S2303).

Next, at step S2304, the gap region data acquisition unit 124 determines whether all adjacent search regions T having the gap pixel ratio not less than the predetermined threshold are connected (step S2304). If not all adjacent search regions T having the gap pixel ratio not less than the predetermined threshold have been connected (step S2304/NO), the process reverts to step S2303 and the gap region data acquisition unit 124 repeats a process for connecting a search region T having the gap pixel ratio not less than the predetermined threshold, with an adjacent search region T having the gap pixel ratio not less than the predetermined threshold. If all adjacent search regions T having the gap pixel ratio not less than the predetermined threshold have been connected (step S2304/YES), the gap region data acquisition unit 124 recognizes all of the connected search regions T to be a single gap region K, and saves information about size and location of the recognized gap region K as gap region data (step S2305). Subsequently, the process proceeds to step S2306, and the gap region data acquisition unit 124 attaches a check label to each of the pixels located in the gap region K corresponding to the gap region data saved at step S2305. Next, the process proceeds to step S2307, and the gap region data acquisition unit 124 determines if a search of gap pixels on a per search region basis T (performed at step S2301) is completed in an entirety of an image.

If a search of gap pixels on a per search region basis T has not been completed in an entirety of an image (step S2307/NO), the process reverts to step 2301, and the gap region data acquisition unit 124 repeats the process of steps S2301 to S2306. With respect to repeating the process of steps S2301 to S2306, if the gap region data acquisition unit 124 finds a search region T including a pixel to which a check label is attached, the gap region data acquisition unit 124 determines that the process of steps S2301 to S2306 has already been completed with respect to the search region T, and the search region T is excluded from an object of the process of steps S2301 to S2306. When a search of gap pixels on a per search region basis T has been completed in an entirety of an image (step S2307/YES), the process proceeds to step 1214, and a process similar to that described in the first embodiment will be carried out.

As described above, the solid object modeling system according to the present embodiment scans an image for each search region T having a predetermined fixed shape and area, and determines if the search region T is a part of a gap region K or not. Further, adjacent search regions that are determined as the part of the gap region are regarded as a single gap region, and data relevant to the gap region is saved. Accordingly, since the solid object modeling system according to the present embodiment can simultaneously process all pixels in a search region T having a predetermined fixed shape and area, a processing speed for generating modeling data can be improved, as compared to the solid object modeling system according to the first embodiment, which searches for a gap region K by performing an extraction of a gap pixel for each pixel of an image.

### [Seventh Embodiment]

The solid object modeling system according to the first embodiment reduces a size of a gap region K between toolpaths L, or preferably eliminates the gap region, by expanding a width of the toolpath L. In the solid object modeling system according to a seventh embodiment, in a case in which a gap region K between toolpaths L runs along an outline R, a change of a route A of a toolpath L is performed in addition to an expansion of a width B of the toolpath L.

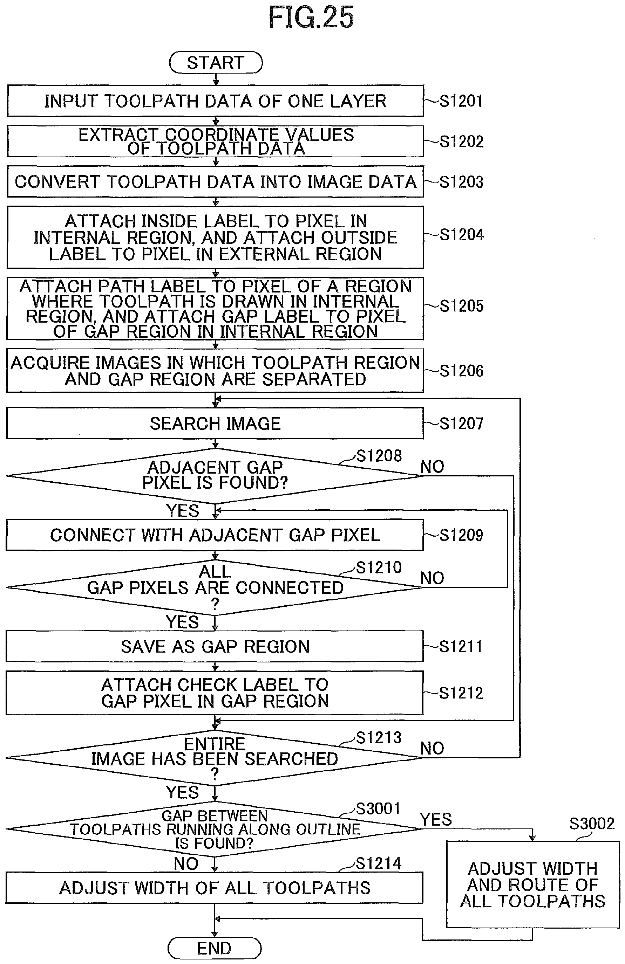

FIG. 25 is a flowchart illustrating an operation of the gap region data acquisition unit 124 and the data processing unit 125 according to the present embodiment. In the following description, regarding a process similar to that in the first embodiment, a same number as a number attached to that in the first embodiment is attached, and the description of the process may be omitted.

As illustrated in FIG. 25, after the gap region data acquisition unit 124 completes searching for all gap pixels included in an entire image at step S1213, the data processing unit 125 determines, for every gap region K corresponding to every gap region data saved at step S1211, whether the gap region K is between toolpaths L running along an outline R, based on the contour information G acquired at step S1204 (step S3001). An example of a gap region K between toolpaths L running along an outline R mentioned here is a gap region E2 between toolpaths L provided in a narrow space which is generated inside an outline R because of a local protrusion of the outline R, like the gap region E2 illustrated in FIG. 11. Further, the gap region K illustrated in FIG. 20A, which is generated between the toolpaths L1 running along the outline R, is also an example of a gap region K between toolpaths L running along an outline R. As mentioned above, a gap region K between toolpaths L running along an outline R in the present embodiment means a gap region that is directly generated by toolpaths L running along an outline R, and a gap region that is generated only indirectly by toolpaths L running along an outline R is not included in a scope of a gap region K between toolpaths L running along an outline R in the present embodiment. Therefore, a gap region K between toolpaths L running along an outline R in the present embodiment does not include a gap region K generated by only toolpaths L not running along an outline R. The same rule is applied to each of the following embodiments to be described below.

At step S3001, if at least one gap region K between toolpaths L running along an outline R is included among all gap regions K corresponding to the gap region data (step S3001/YES), the process proceeds to step S3002 and the data processing unit 125 adjusts widths B and routes A of all toolpaths L. Next, the data processing unit 125 obtains data concerning the adjustment of the widths B and routes A of all the toolpaths L performed at step S3002, as the gap suppression control data, and adds the obtained gap suppression control data to the toolpath data, to generate modeling data which is discharging information for controlling discharge of a filament.

Conversely, if a gap region K between toolpaths L running along an outline R is not included in all the gap regions K corresponding to gap region data (step S3001/NO), the process proceeds to step S1214, and a process similar to that described in the first embodiment will be carried out.

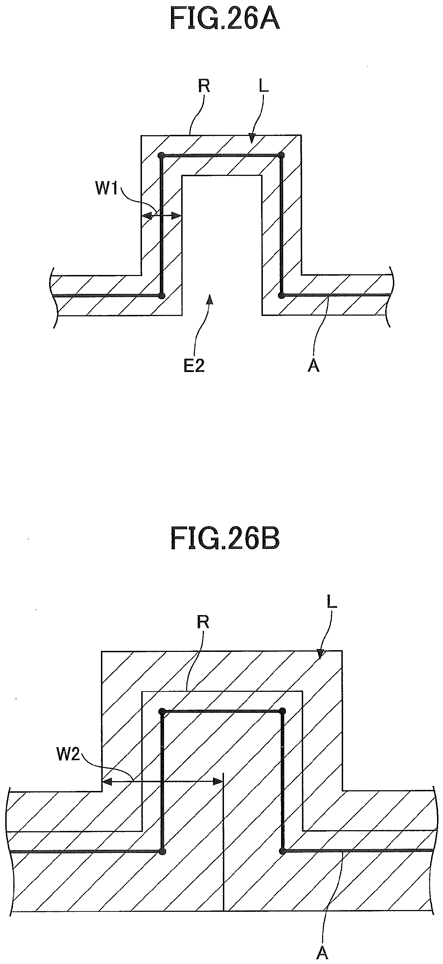

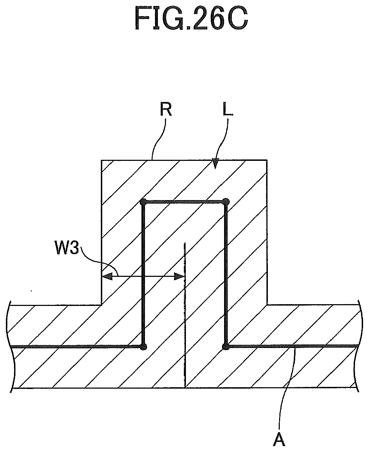

For example, in a case in which a gap region E2 exists between toolpaths L running along an outline R protruding upward as illustrated in FIG. 26A, in order to eliminate the gap region E2, if a width of the toolpath L were expanded from W1 to W2 without changing a route A of the toolpath L as illustrated in FIG. 26B, the toolpath L would extend outside of the outline R. In the present embodiment, to prevent the toolpath L from extending outside of the outline R, in addition to expanding a width of the toolpath L from W1 to W3, a route A of the toolpath L is moved toward an inside of the outline R, as illustrated in FIG. 26C. As a result, the gap region E2 can be eliminated, and the toolpath L is prevented from extending outside of the outline R. As a result, according to the present embodiment, in addition to an effect of the above described first embodiment, quality of a surface of a 3D model can be improved, and forming of a 3D model by the 3D printer 2 can be performed more precisely.

That is, in a process for adjusting widths B and routes A of all toolpaths L performed at step S3002, widths B of all toolpaths L are expanded, and routes A of all the toolpaths L are moved toward an inside of an outline R of an internal region C represented by the contour information G. The width B and the route A of the toolpaths L after adjustment are determined such that a gap region E2 between toolpaths L running along an outline R can be reduced in size or preferably eliminated, and that the outline R can be maintained in the same condition as the outline R before adjustment.

### [Eighth Embodiment]

The solid object modeling system according to the second embodiment expands a width of the toolpath L to reduce a size of a gap region K having an area not less than a threshold, or preferably to eliminate the gap region K. In the solid object modeling system according to an eighth embodiment, similar to the seventh embodiment, in a case in which a gap region K between toolpaths L runs along an outline R, a change of a route A of a toolpath L is performed in addition to an expansion of a width B of the toolpath L.

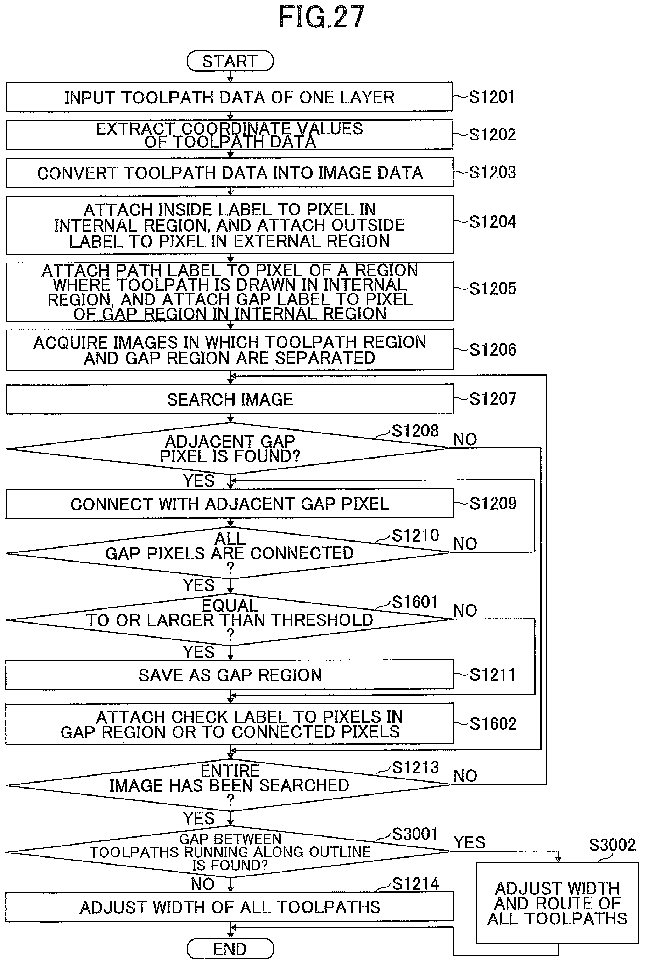

FIG. 27 is a flowchart illustrating an operation of the gap region data acquisition unit 124 and the data processing unit 125 according to the present embodiment. In the following description, regarding a process similar to that in the second embodiment, a same number as a number attached to that in the second embodiment is attached, and the description of the process may be omitted. Further, regarding a process similar to that in the seventh embodiment, a same number as a number attached to that in the seventh embodiment is attached, and the description of the process may be omitted.

As illustrated in FIG. 27, similar to the seventh embodiment, when the gap region data acquisition unit 124 completes searching for all gap pixels included in an entire image at step S1213, the data processing unit 125 determines, for every gap region K corresponding to every gap region data saved at step S1211, whether the gap region K is between toolpaths L running along an outline R, based on the contour information G acquired at step S1204 (step S3001). If at least one gap region K between toolpaths L running along an outline R is included among all gap regions K corresponding to gap region data (step S3001/YES), the process proceeds to step S3002 and the data processing unit 125 adjusts widths B and routes A of toolpaths L in a similar manner to the seventh embodiment. A process to be performed thereafter is similar to the process as described in the seventh embodiment.

Conversely, if a gap region K between toolpaths L running along an outline R is not included in all the gap regions K corresponding to gap region data (step S3001/NO), the process proceeds to step S1214, and a process similar to that described in the first embodiment will be carried out.

According to the present embodiment, in addition to an effect of the above described second embodiment, similar to the seventh embodiment, the gap region E2 can be eliminated, and the toolpath L is prevented from extending outside of the outline R. As a result, quality of a surface of a 3D model can be improved, and forming of a 3D model by the 3D printer 2 can be performed more precisely.

### [Ninth Embodiment]

In the solid object modeling system according to the third embodiment, a width of a part of toolpaths L adjacent to a gap region K is expanded to reduce a size of a gap region K between the toolpaths L, or preferably to eliminate the gap region K. In the solid object modeling system according to a ninth embodiment, similar to the seventh embodiment, in a case in which a gap region K between toolpaths L runs along an outline R, a change of a route A of a part of a toolpath L adjacent to a gap region K is performed in addition to an expansion of a width of the part of the toolpath L.

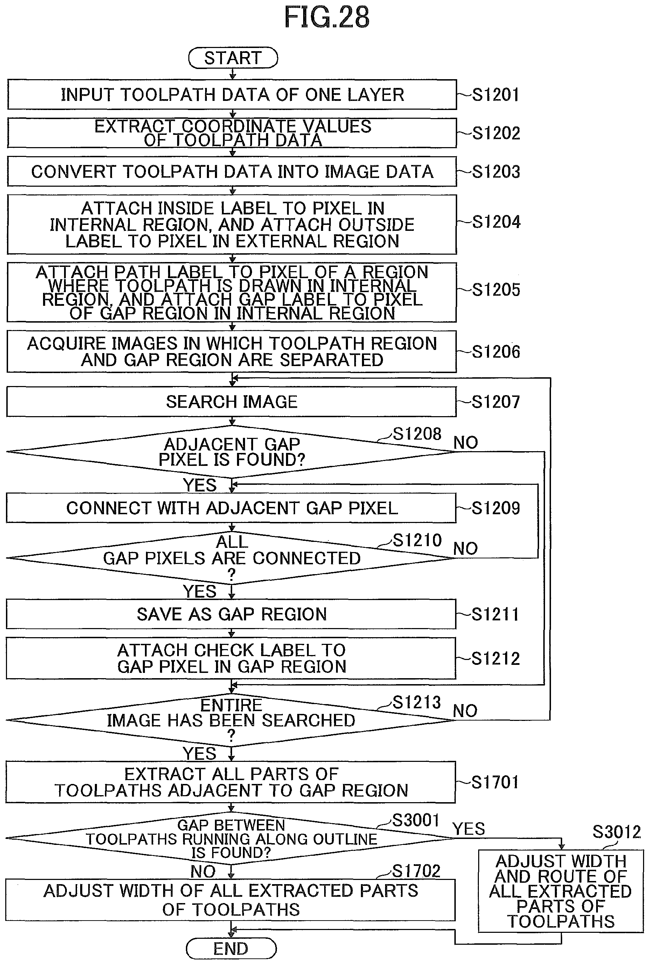

FIG. 28 is a flowchart illustrating an operation of the gap region data acquisition unit 124 and the data processing unit 125 according to the present embodiment. In the following description, regarding a process similar to that in the third embodiment, a same number as a number attached to that in the third embodiment is attached, and the description of the process may be omitted. Further, regarding a process similar to that in the seventh embodiment, a same number as a number attached to that in the seventh embodiment is attached, and the description of the process may be omitted.

As illustrated in FIG. 28, similar to the seventh embodiment, after the gap region data acquisition unit 124 completes searching for all gap pixels included in an entire image at step S1213, the data processing unit 125 determines, for every gap region K corresponding to every gap region data saved at step S1211, whether the gap region K is between toolpaths L running along an outline R, based on the contour information G acquired at step S1204 (step S3001). If at least one gap region K between toolpaths L running along an outline R is included among all gap regions K corresponding to gap region data (step S3001/YES), the process proceeds to step S3012 and the data processing unit 125 adjusts widths B and routes A of all the parts Q of the toolpaths L extracted at step S1701, in accordance with the procedure mentioned above with reference to FIGS. 26A to 26C. Next, the data processing unit 125 obtains data concerning the adjustment of the widths B and routes A of all the parts Q of the toolpaths L performed at step S3012, as the gap suppression control data, and adds the obtained gap suppression control data to the toolpath data, to generate modeling data which is discharging information for controlling discharge of a filament.

Conversely, if a gap region K between toolpaths L running along an outline R is not included in all the gap regions K corresponding to gap region data (step S3001/NO), the process proceeds to step S1702, and a process similar to that described in the third embodiment will be carried out.

According to the present embodiment, in addition to an effect of the above described third embodiment, similar to the seventh embodiment, the gap region E2 can be eliminated, and the toolpath L is prevented from extending outside of the outline R. As a result, quality of a surface of a 3D model can be improved, and forming of a 3D model by the 3D printer 2 can be performed more precisely.

### [Tenth Embodiment]

In the solid object modeling system according to the fifth embodiment, by changing a route A of toolpaths L, a gap region K between the toolpaths L is reduced in size, or preferably is eliminated. In the solid object modeling system according to a tenth embodiment, similar to the seventh embodiment, in a case in which a gap region K between toolpaths L runs along an outline R, a change of a route A of a toolpath L is performed in addition to an expansion of a width B of the toolpath L.

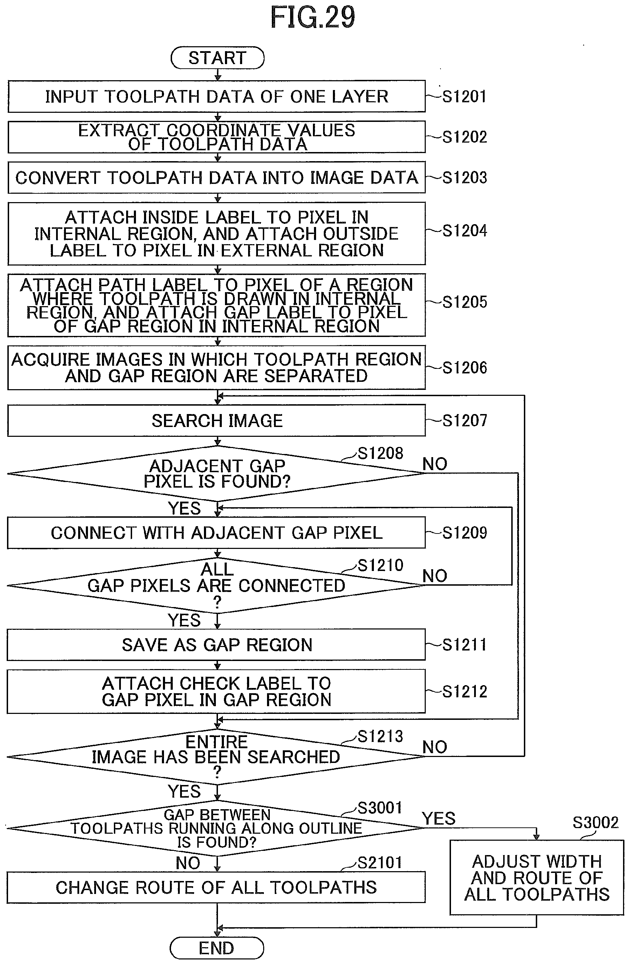

FIG. 29 is a flowchart illustrating an operation of the gap region data acquisition unit 124 and the data processing unit 125 according to the present embodiment. In the following description, regarding a process similar to that in the fifth embodiment, a same number as a number attached to that in the fifth embodiment is attached, and the description of the process may be omitted. Further, regarding a process similar to that in the seventh embodiment, a same number as a number attached to that in the seventh embodiment is attached, and the description of the process may be omitted.

As illustrated in FIG. 29, similar to the seventh embodiment, after the gap region data acquisition unit 124 completes searching for all gap pixels included in an entire image at step S1213, the data processing unit 125 determines, for every gap region K corresponding to every gap region data saved at step S1211, whether the gap region K is between toolpaths L running along an outline R, based on the contour information G acquired at step S1204 (step S3001). If at least one gap region K between toolpaths L running along an outline R is included among all gap regions K corresponding to gap region data (step S3001/YES), the process proceeds to step S3002 and the data processing unit 125 adjusts widths B and routes A of toolpaths L in a similar manner to the seventh embodiment. A process to be performed thereafter is similar to the process as described in the seventh embodiment.

Conversely, if a gap region K between toolpaths L running along an outline R is not included in all the gap regions K corresponding to gap region data (step S3001/NO), the process proceeds to step S2101, and a process similar to that described in the fifth embodiment will be carried out.

According to the present embodiment, in addition to an effect of the above described fifth embodiment, similar to the seventh embodiment, the gap region E2 can be eliminated, and the toolpath L is prevented from extending outside of the outline R. As a result, quality of a surface of a 3D model can be improved, and forming of a 3D model by the 3D printer 2 can be performed more precisely.

### [Eleventh Embodiment]

Similar to the first embodiment, the solid object modeling system according to the sixth embodiment also reduces a size of a gap region K between toolpaths L, or preferably eliminates the gap region, by expanding a width of the toolpath L. In the solid object modeling system according to a eleventh embodiment, similar to the seventh embodiment, in a case in which a gap region K between toolpaths L runs along an outline R, a change of a route A of a toolpath L is performed in addition to an expansion of a width B of the toolpath L, which consequently mitigates an effect on an outline R of a 3D model by a process for expanding a width of the toolpath L in order to reduce a size of a gap region K between toolpaths L running along an outline R or preferably to eliminate the gap region K.

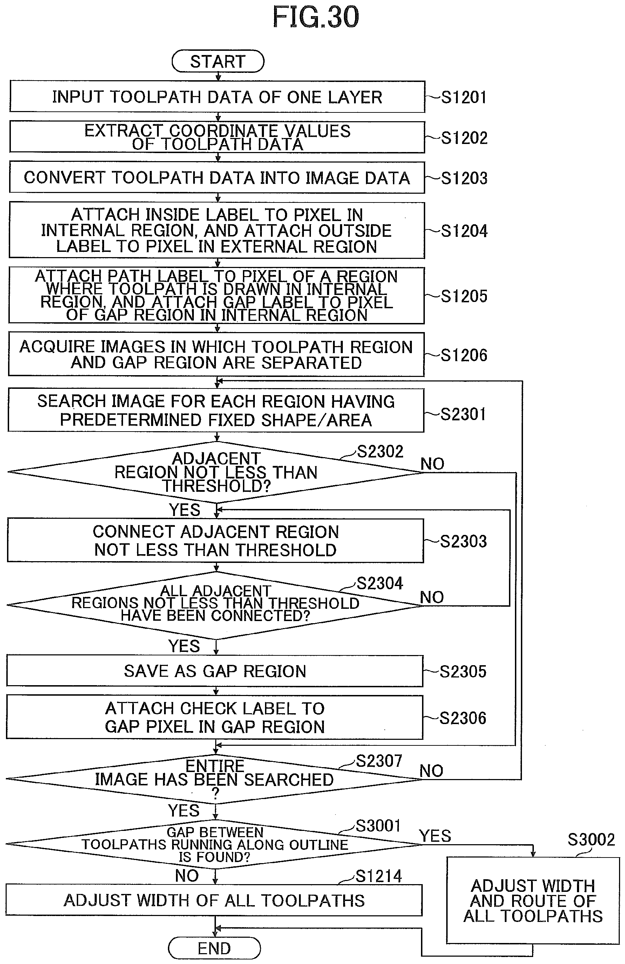

FIG. 30 is a flowchart illustrating an operation of the gap region data acquisition unit 124 and the data processing unit 125 according to the present embodiment. In the following description, regarding a process similar to that in the sixth embodiment, a same number as a number attached to that in the sixth embodiment is attached, and the description of the process may be omitted. Further, regarding a process similar to that in the seventh embodiment, a same number as a number attached to that in the seventh embodiment is attached, and the description of the process may be omitted.

As illustrated in FIG. 30, similar to the seventh embodiment, after the gap region data acquisition unit 124 completes searching for all gap pixels included in an entire image at step S2307, the data processing unit 125 determines, for every gap region K corresponding to every gap region data saved at step S2305, whether the gap region K is between toolpaths L running along an outline R, based on the contour information G acquired at step S1204 (step S3001). If at least one gap region K between toolpaths L running along an outline R is included among all gap regions K corresponding to gap region data (step S3001/YES), the process proceeds to step S3002 and the data processing unit 125 adjusts widths B and routes A of toolpaths L in a similar manner to the seventh embodiment. A process to be performed thereafter is similar to the process as described in the seventh embodiment.

Conversely, if a gap region K between toolpaths L running along an outline R is not included in all the gap regions K corresponding to gap region data (step S3001/NO), the process proceeds to step S1214, and a process similar to that described in the first embodiment will be carried out.

According to the present embodiment, in addition to an effect of the above described sixth embodiment, similar to the seventh embodiment, the gap region E2 can be eliminated, and the toolpath L is prevented from extending outside of the outline R. As a result, quality of a surface of a 3D model can be improved, and forming of a 3D model by the 3D printer 2 can be performed more precisely.

In each of the above embodiments, an example in which the 3D data conversion processing unit 120 generates gap suppression control data is described. However, this is merely an example, and functions of the 3D data conversion processing unit 120 and the 3D printer driver 130 may be incorporated in the 3D printer 2. In this case, 3D data acquired by the 3D data acquisition unit 121 that was described with reference to FIGS. 7A to 7D may be entered to the 3D printer 2.

Further, by storing modeling data such as a toolpath generated in the PC 1 into a storage medium such as a USB memory, and by enabling the 3D printer 2 to read the modeling data from the storage medium, the 3D printer 2 may form a 3D model based on the modeling data read from the storage medium.

Alternatively, the solid object modeling system may be configured such that a function of the 3D data conversion processing unit 120 is implemented in the 3D printer 2 but a function of the 3D printer driver 130 remains in the PC 1. In this case, the 3D data conversion processing unit 120 may be configured to execute a modeling process by the 3D printer 2 based on data representing a job created by the 3D printer driver 130.

Further, examples of the solid object modeling system in the description of each of the above embodiments are configured to perform a process to generate gap region data from toolpath data of each layer, and a process to expand a width of the toolpath, to add a new toolpath, or to change a route of the toolpath, in order to reduce a size of a gap region represented by the generated gap region data, or preferably to eliminate the gap region. However, the process to expand a width of a toolpath, to add a new toolpath, or to change a route of a toolpath may be executed in combination properly to reduce a size of a gap region, or preferably to eliminate the gap region.

Further, to adjust a gap region represented by gap region data, a width of a toolpath may be expanded so that a gap region can be reduced in size or so that a gap region can be eliminated.

The information processing device, the solid object modeling system, the information processing method, the information processing program, and the computer-readable recording medium have been described with reference to the above embodiments. However, the present invention is not limited to these embodiments. Various variations and enhancements may be applied within the scope of the present invention.

The present application is based on and claims the benefit of priority of Japanese Patent Application No. 2015-236870, filed on December 3, 2015, the entire contents of which are incorporated herein by reference.

### [DESCRIPTION OF THE REFERENCE NUMERALS]

1 PC
2 3D printer
10 CPU
20 RAM
30 ROM
40 HDD
50 I/F
60 LCD
70 operation unit
80 bus
100 controller
110 network I/F
120 3D data conversion processing unit
121 3D data acquisition unit
122 slice data acquisition unit
123 toolpath data acquisition unit
124 gap region data acquisition unit
125 data processing unit
126 converted data output unit
130 3D printer driver
201 discharging head
202 arm
211 base
220 controller
221 main control unit
222 network control unit
224 discharging head driver

## Claims

1. An information processing device configured to process three-dimensional information representing a three-dimensional shape of a solid object to be modeled by a solid object modeling device configured to model the solid object by depositing a plurality of layers of filamentary molding materials, each of the layers being formed by discharging the filamentary molding material on a flat surface, the information processing device comprising:
a three-dimensional information acquisition unit configured to acquire the three-dimensional information;
a layer information generating unit configured to generate a plurality of pieces of layer information corresponding to the respective layers of the filamentary molding materials, by slicing the three-dimensional information;
a deposition information generating unit configured to generate deposition information from the layer information, the deposition information being used for depositing the filamentary molding material by discharging the filamentary molding material on the flat surface;
a gap region information generating unit configured to generate gap region information representing a gap region to be formed between the filamentary molding materials by depositing the filamentary molding material based on the deposition information; and
a discharging information generating unit configured to generate discharging information for controlling discharge of the filamentary molding material, in accordance with the deposition information and the gap region information.

2. The information processing device according to claim 1, wherein the discharging information generating unit is configured to generate the discharging information including information for controlling a width of the filamentary molding material when the filamentary molding material is deposited on the flat surface, such that a size of the gap region to be formed between the filamentary molding materials is reduced.

3. The information processing device according to claim 2, wherein the gap region information generating unit is configured to obtain, from at least one of a plurality of the gap region information, threshold gap region information related to a gap region having a size not less than a predetermined threshold, and
with respect to the gap region having the size not less than the predetermined threshold, the discharging information generating unit is configured to generate the discharging information including the information for controlling the width of the filamentary molding material, based on the threshold gap region information.

4. The information processing device according to claim 2 or 3, wherein the discharging information generating unit is configured to
acquire location information of the gap region from the gap region information,
extract discharge region information related to a part of the filamentary molding material to be discharged adjacent to the gap region, and
generate the discharging information including the information for controlling the width of the part of the filamentary molding material related to the extracted discharge region information.

5. The information processing device according to any one of claims 2 to 4,
wherein the deposition information generating unit is configured to acquire the layer information including contour information representing an outline of the layer of the filamentary molding material, and
the discharging information generating unit is configured to determine, as a region in which the filamentary molding material is to be discharged, the gap region of which an adjacent filamentary molding material is adjacent to another filamentary molding material running along the outline represented by the contour information.

6. The information processing device according to any one of claims 1 to 5, wherein the discharging information generating unit is configured to generate the discharging information including information for controlling a route of the filamentary molding material when the filamentary molding material is deposited on the flat surface, such that a size of the gap region to be formed between the filamentary molding materials is reduced.

7. The information processing device according to any one of claims 1 to 6, wherein the gap region information generating unit is configured to generate the gap region information by searching the deposition information in each region matching a predetermined condition.

8. The information processing device according to any one of claims 1 to 4, 6 and 7,
wherein the deposition information generating unit is configured to acquire the layer information including contour information representing an outline of the layer of the filamentary molding material, and
the discharging information generating unit is configured, in a case in which the gap region represented by the gap region information includes a gap region to be formed between filamentary molding materials running along the outline represented by the contour information, to generate the discharging information including information for controlling a route and a width of the filamentary molding material such that a size of the gap region, to be formed between the filamentary molding materials running along the outline, is reduced.

9. A solid object modeling system comprising:
the information processing device according to any one of claims 1 to 8, and
the solid object modeling device configured to model the solid object by depositing the layer of the filamentary molding material, the layer being formed by discharging the filamentary molding material in accordance with the discharging information generated by the discharging information generating unit in the information processing device.

10. An information processing method for processing three-dimensional information representing a three-dimensional shape of a solid object to be modeled by a solid object modeling device configured to model the solid object by depositing a plurality of layers of filamentary molding materials, each of the layers being formed by discharging the filamentary molding material on a flat surface, the method comprising:
acquiring the three-dimensional information;
generating a plurality of pieces of layer information corresponding to the respective layers of the filamentary molding materials, by slicing the three-dimensional information;
generating, from the layer information, deposition information used for depositing the filamentary molding material by discharging the filamentary molding material on the flat surface;
generating gap region information representing a gap region to be formed between the filamentary molding materials by depositing the filamentary molding material based on the deposition information; and
generating discharging information for controlling discharge of the filamentary molding material, in accordance with the deposition information and the gap region information.

11. An information processing program to cause an information processing device to execute a method for processing three-dimensional information representing a three-dimensional shape of a solid object to be modeled by a solid object modeling device configured to model the solid object by depositing a plurality of layers of filamentary molding materials, each of the layers being formed by discharging the filamentary molding material on a flat surface, the method comprising:
acquiring the three-dimensional information;
generating a plurality of pieces of layer information corresponding to the respective layers of the filamentary molding materials, by slicing the three-dimensional information;
generating, from the layer information, deposition information used for depositing the filamentary molding material by discharging the filamentary molding material on the flat surface;
generating gap region information representing a gap region to be formed between the filamentary molding materials by depositing the filamentary molding material based on the deposition information; and
generating discharging information for controlling discharge of the filamentary molding material, in accordance with the deposition information and the gap region information.

12. A non-transitory computer-readable recording medium storing the information processing program according to claim 11.
